(19) Europäisches Patentamt
European Patent Office
Office européen des brevets

(11) **EP 2 624 561 A2**

# EUROPEAN PATENT APPLICATION
published in accordance with Art. 153(4) EPC

(43) Date of publication:
**07.08.2013 Bulletin 2013/32**

(51) Int Cl.:
***H04N 7/30*** (2006.01)

(21) Application number: **11829581.5**

(22) Date of filing: **28.09.2011**

(86) International application number:
**PCT/KR2011/007164**

(87) International publication number:
**WO 2012/044075 (05.04.2012 Gazette 2012/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.09.2010 US 387112 P**

(71) Applicant: **Samsung Electronics Co., Ltd**
**Gyeonggi-do 443-742 (KR)**

(72) Inventors:
- **HONG, Yoon-Mi**
  **Seoul 156-092 (KR)**
- **HAN, Woo-Jin**
  **Suwon-si**
  **Gyeonggi-do 443-714 (KR)**

- **LEE, Tammy**
  **Seoul 137-070 (KR)**
- **CHEON, Min-Su**
  **Yongin-si**
  **Gyeonggi-do 446-591 (KR)**
- **SEREGIN, Vadim**
  **Suwon-si**
  **Gyeonggi-do 443-740 (KR)**

(74) Representative: **Fearnside, Andrew Simon**
**Appleyard Lees**
**15 Clare Road**
**Halifax, HX1 2HY (GB)**

(54) **METHOD AND DEVICE FOR THE TRANSFORMATION AND METHOD AND DEVICE FOR THE REVERSE TRANSFORMATION OF IMAGES**

(57)    An image transforming method, an image transforming apparatus, an image inverse-transforming method, and an image inverse-transforming apparatus, the image transforming method including the operations of selecting a predetermined frequency area for frequency transformation with respect to an MxN (where M and N are positive integers) input block, acquiring a truncated transform matrix by selecting elements for generation of transformation coefficients corresponding to the selected frequency area from among elements of an MxN transform matrix for use in the frequency transformation with respect to the MxN input block, and producing transformation coefficients corresponding to the selected frequency area by performing frequency transformation by applying the truncated transform matrix to the MxN input block.

## FIG. 2

**Description**

TECHNICAL FIELD

One or more embodiments of the present invention relate to image encoding and image decoding, and more particularly, to an image transforming method, an image transforming apparatus, an image inverse-transforming method, and an image inverse-transforming apparatus for reducing calculation complexity by processing only a low frequency band of a block.

BACKGROUND ART

According to a current international video coding standard, such as H.264 or MPEG-4, a video signal is hierarchically divided into a sequence, a frame, a slice, a macroblock, and a block, wherein the block is a minimum processing unit. In terms of encoding, a prediction remaining error of the block is determined via intra-frame or inter-frame prediction, block transformation is performed such that energy is focused on a coefficient of a decimal, and image data is compressed and recorded as a coded bitstream via quantization, scanning, run-length coding, and entropy coding. In terms of decoding, processes are performed in the opposite order. First, a block transformation coefficient of entropy coding is extracted from a bitstream. Then, a prediction remaining error of a block is reconstructed via inverse-quantization and inverse-transformation, and prediction information is used to reconstruct video data of the block. In an encoding-decoding process, a transformation module is a base of video compression, and transformation performance of the transformation module directly affects the general performance of a codec.

Discrete cosine transform (DCT) is employed as an initial video coding standard, such as MPEG-1 or H.261. After DCT was introduced in 1974, DCT has been widely used in image and video coding fields. Transformation performance of DCT is excellent compared to all sub-optimal transforms since DCT removes a correlation of image elements in a transformation domain and prepares a base for highly-efficient image compression. However, since a DCT matrix is expressed using floating point numbers, many system resources are used due to massive floating point operations. Accordingly, a new DCT algorithm is required so as to improve transformation efficiency while performing transformation on a large-size block.

DETAILED DESCRIPTION OF THE INVENTION

TECHNICAL PROBLEM

One or more exemplary embodiments provide image transforming methods, image transforming apparatuses, image inverse-transforming methods, and image inverse-transforming apparatuses for producing transformation coefficients belonging to a low frequency band via a less number of operations.

TECHNICAL SOLUTION

According to an embodiment of the present invention, transformation coefficients belonging to a low frequency band are extracted by using a truncated transform matrix obtained by truncating an existing transform matrix.

ADVANTAGEOUS EFFECTS

According to embodiments of the present invention, transformation and inverse-transformation are performed on only a selected low frequency band, and thus, the number of operations required by the transformation and inverse-transformation may be reduced. According to embodiments of the present invention, transformation and inverse-transformation are performed via additions, subtractions, and a shift operation, and thus, the number of operations required by the transformation and inverse-transformation may be reduced.

BRIEF DESCRIPTION OF THE DRAWINGS

FIG. 1 is a block diagram of an image encoding apparatus according to an embodiment of the present invention;
FIG. 2 is a block diagram of an image transforming apparatus according to an embodiment of the present invention;
FIG. 3 is a reference diagram for illustrating a process in which a truncated transform matrix acquisition unit included in the image transforming apparatus of FIG. 2 acquires a truncated transform matrix according to a frequency band selected by a frequency area selection unit included in the image transforming apparatus of FIG. 2, according to an embodiment of the present invention;

FIG. 4 is a flow graph of 4-point, 8-point, 16-point, and 32-point discrete cosine transform (DCT), according to an embodiment of the present invention;

FIG. 5 is a flow graph of a 32-point DCT according to another embodiment of the present invention;

FIG. 6 is a reference diagram of an operation process of a butterfly structure forming the 32-point DCT of FIG. 5;

FIG. 7 is a flowchart illustrating an image transforming method according to an embodiment of the present invention;

FIG. 8 is a block diagram of an image decoding apparatus according to an embodiment of the present invention;

FIG. 9 is a block diagram of an image inverse-transforming apparatus according to an embodiment of the present invention;

FIG. 10 is a reference diagram for illustrating a process in which a truncated inverse-transform matrix acquisition unit included in the image inverse-transforming apparatus of FIG. 9 acquires a truncated inverse-transform matrix according to a frequency band of a received transform block, according to an embodiment of the present invention;

FIG. 11 is a flowchart illustrating an image inverse-transforming method according to an embodiment of the present invention; and

FIGS. 12A and 12B are reference diagrams illustrating transformation coefficients of a frequency band which is to be selected, according to an embodiment of the present invention.

BEST MODE

According to an aspect of the present invention, there is provided an image transforming method comprising: selecting a predetermined frequency area for frequency transformation with respect to an MxN input block, wherein M and N are positive integers; acquiring a truncated transform matrix by selecting elements for generation of transformation coefficients corresponding to the selected frequency area from among elements of an MxN transform matrix for use in the frequency transformation with respect to the MxN input block; and producing transformation coefficients corresponding to the selected frequency area by performing frequency transformation by applying the truncated transform matrix to the MxN input block.

According to another aspect of the present invention, there is provided an image inverse-transforming apparatus comprising: a frequency area selection unit which selects a predetermined frequency area for frequency transformation with respect to an MxN input block, wherein M and N are positive integers; a truncated transform matrix acquiring unit which acquires a truncated transform matrix by selecting elements for generation of transformation coefficients corresponding to the selected frequency area from among elements of an MxN transform matrix for use in the frequency transformation with respect to the MxN input block; and a frequency transformation unit which produces transformation coefficients corresponding to the selected frequency area by performing frequency transformation by applying the truncated transform matrix to the MxN input block.

According to another aspect of the present invention, there is provided an image inverse-transforming method comprising: receiving transformation coefficients of a predetermined frequency band from among transformation coefficients of an MxN block, wherein M and N are positive integers; acquiring a truncated inverse-transform matrix by selecting elements for inverse transformation with respect to the transformation coefficients of the selected frequency band from among elements of an MxN inverse-transform matrix for use in frequency inverse-transformation with respect to the MxN block; and restoring the MxN block by performing frequency inverse-transformation by applying the truncated inverse-transform matrix to the transformation coefficients of the selected frequency band.

According to another aspect of the present invention, there is provided an image inverse-transforming apparatus comprising: a truncated inverse-transform matrix acquisition unit which acquires a truncated inverse-transform matrix by selecting elements for inverse transformation with respect to transformation coefficients corresponding to a predetermined frequency band from among elements of an MxN inverse-transform matrix for use in frequency inverse-transformation with respect to an MxN block, wherein M and N are positive integers; and an inverse-transformation unit which restores the MxN block by performing frequency inverse-transformation by applying the truncated inverse-transform matrix to the transformation coefficients of the predetermined frequency band.

MODE OF THE INVENTION

Hereinafter, exemplary embodiments will be described more fully with reference to the accompanying drawings.

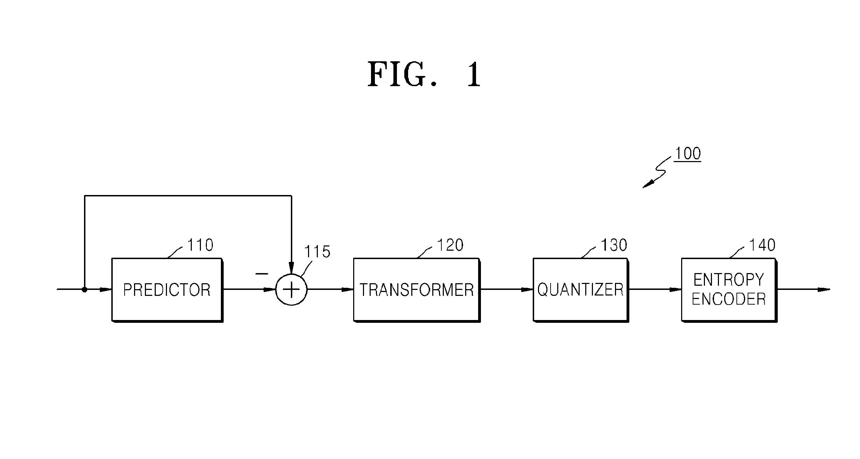

FIG. 1 is a block diagram of an image encoding apparatus 100 according to an embodiment of the present invention.

Referring to FIG. 1, the image encoding apparatus 100 includes a predictor 110, a subtracter 115, a transformer 120, a quantizer 130, and an entropy encoder 140.

The predictor 110 divides an input image into blocks having a predetermined size, and generates a prediction block by performing inter prediction or intra prediction on each block. In detail, the predictor 110 performs inter prediction for generating a prediction block through motion prediction and compensation processes, which generate a motion vector indicating a region similar to a current block within a predetermined search range of a reference picture that is previously encoded and then restored, and intra prediction for generating a prediction block by using data of an adjacent block that is adjacent to a current block.

The subtracter 115 generates a residual by subtracting the prediction block of the current block from original image data.

The transformer 120 transforms the residual to a frequency region. Specifically, in exemplary embodiments of the present invention, a discrete cosine transform (DCT) matrix defined with respect to an existing block having a relatively small size, such as 4x4 or, may be enlarged and may be applied to a block having a size of at least 16x16. As is described below, the transformer 120 performs DCT according to additions and subtractions based on an integer and a shift operation, instead of a floating point operation, by substituting elements of a transformation matrix used for existing DCT with rational numbers, thereby reducing calculation complexity while increasing an operation speed. The transformer 120 may also perform DCT by using a transformation matrix including elements that are obtained by multiplying the elements of a transformation matrix used for DCT by a power of 2 and then rounding up the multiplied elements, thereby reducing overall calculation complexity. The transformer 120 obtains a truncated transform matrix by selecting elements for producing transformation coefficients corresponding to a predetermined frequency area from among the elements of an MxN transform matrix that is used for frequency transformation with respect to an MxN input block, and performs transformation by using the truncated transform matrix, thereby reducing the number of operations required for the transformation.

The quantizer 130 quantizes the transformed residual. The quantizer 130 may apply a predetermined scaling factor to a transformation value so as to reduce an error value between a value transformed by using the transform matrix approximated by the transformer 120 and a value obtained via DCT based on an actual floating point operation. The entropy encoder 140 generates a bitstream by performing variable length encoding on quantized image data.

Hereinafter, image transformation according to an exemplary embodiment will be described more fully with reference to the accompanying drawings.

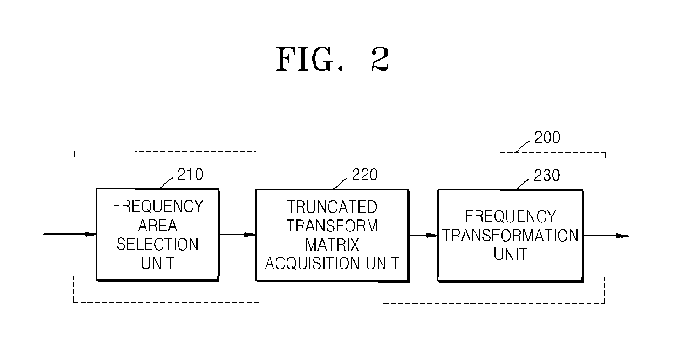

FIG. 2 is a block diagram of an image transforming apparatus 200 according to an embodiment of the present invention. The image transforming apparatus 200 of FIG. 2 corresponds to the transformer 120 of FIG. 1.

Referring to FIG. 2, the image transforming apparatus 200 includes a frequency area selection unit 210, a truncated transform matrix acquisition unit 220, and a frequency transformation unit 230.

The frequency area selection unit 210 selects a predetermined frequency area for frequency transformation with respect to an MxN (where M and N are positive integers) input block. In other words, when transforming the MxN input block into a frequency area, the frequency area selection unit 210 selects what frequency band of transformation coefficients is to be produced. Since generally a low frequency band of a transformed block produced via frequency transformation has a relatively high value and a high frequency band has a relatively small value, the frequency area selection unit 210 may select a low frequency band to minimize an error while reducing the number of operations. The range of a low frequency band may be determined from a range pre-defined by an encoding side and a decoding side, or may be determined by analyzing the transformation coefficients of the transformed block and detecting a frequency band having non-zero transformation coefficients.

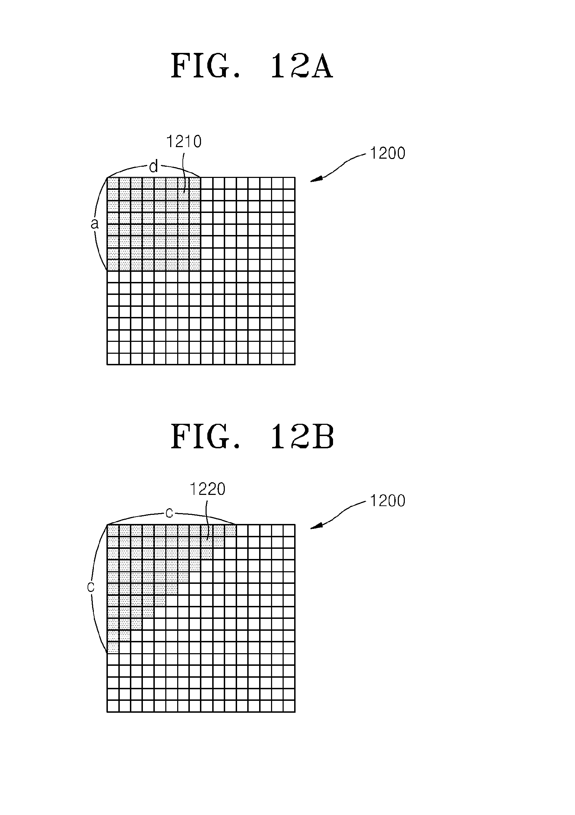

FIGS. 12A and 12B are reference diagrams illustrating transformation coefficients of a frequency band which is to be selected, according to an embodiment of the present invention.

Referring to FIGS. 12A and 12B, the frequency area selection unit 210 may determine what frequency band of transformation coefficients is to be acquired from an overall transformed block 1200. For example, to extract a low frequency band of transformation coefficients from the overall transformed block 1200, the frequency area selection unit 210 may select the transformation coefficients within an axd transformed block 1210 as illustrated in FIG. 12A, or the transformation coefficients within a triangular block 1220 around the DC coefficient as illustrated in FIG. 12B. Information about the transformation coefficients in the selected frequency band, as in FIG. 12A, may be transmitted by including the values of a and d in a bitstream, or the values of a and d may be previously set based on the size information of the overall transformed block 1200 in the encoding side and the decoding side. When the triangular block 1220 is used as illustrated in FIG. 12B, information about the base c and the height c of the triangular block 1220 may be included in a bitstream, or the value of c may be previously set in the encoding side and the decoding side. Information regarding what type among a rectangular block 1210, namely, the axd transformed block 1210, and the triangular block 1220 of FIGS. 12A and 12B is used to define a low frequency band of which transformation coefficients are to be acquired may also be included in the form of a predetermined syntax in a bitstream and be transmitted.

The truncated transform matrix acquisition unit 220 acquires a truncated transform matrix by selecting elements for generation of transformation coefficients corresponding to the selected frequency band from among the elements of the MxN transform matrix for use in the frequency transformation with respect to the MxN input block. Herein, the frequency transformation is assumed as DCT. Examples of the DCT may include DCT based on an integer and DCT based on a floating-point operation. In the DCT assumed herein, a one-dimensional (1 D) transform matrix is generally used in a column direction and in a row direction of the MxN input block.

The frequency transformation unit 230 produces transformation coefficients corresponding to the selected frequency band by performing frequency transformation by applying the truncated transform matrix to the MxN input block.

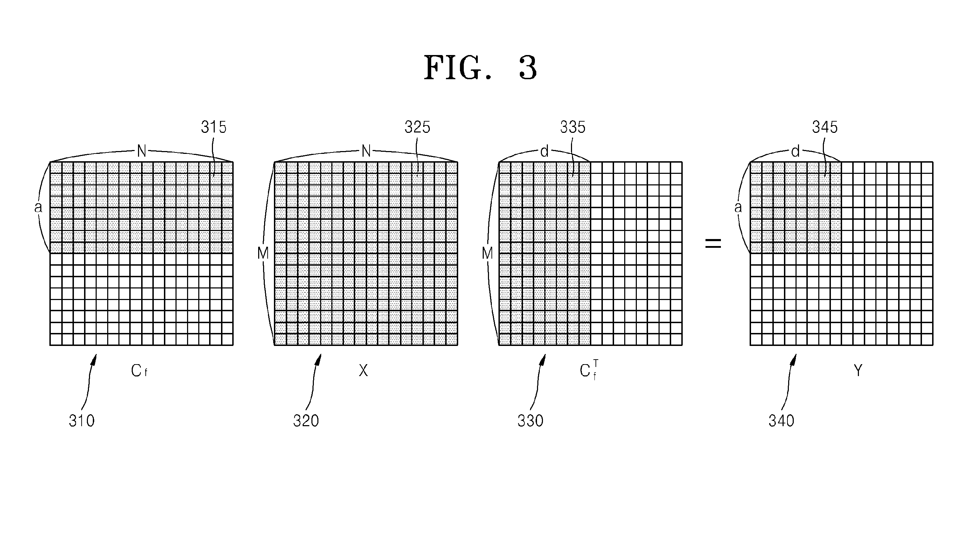

FIG. 3 is a reference diagram for illustrating a process in which the truncated transform matrix acquisition unit 220 acquires the truncated transform matrix according to the frequency band selected by the frequency area selection unit 210, according to an embodiment of the present invention.

Referring to FIG. 3, when a matrix representing the MxN input block is referred to as X 320, an MxN vertical transform matrix is referred to as Cf 310, and an MxN horizontal transform matrix is referred to as Cf$^T$ 330, an MxN transformed block Y 340 may be obtained by transforming the MxN input block X 320 into a frequency area through a matrix operation expressed by Equation; Cf * X * Cf$^T$.

According to an embodiment, all of the transformation coefficients constituting the MxN transformed block Y 340 are not acquired, but only the transformation coefficients in the frequency band selected by the frequency area selection unit 210 are acquired. As described above, when the MxN input block X 320 is transformed into a frequency area, the frequency area selection unit 210 may determine what frequency band of transformation coefficients are to be produced. As illustrated in FIG. 3, it is assumed that an axd (where a denotes a positive integer smaller than M and d denotes a positive integer smaller than N) transformed block 345 corresponding to a low frequency band is selected by the frequency area selection unit 210.

The axd transformed block 345 in a low frequency band may be obtained through a matrix operation expressed by Equation: MCf * X * MCf$^T$, by not applying the MxN vertical transform matrix Cf 310 and the MxN horizontal transform matrix Cf$^T$ 330 but applying an axN truncated vertical transform matrix MCf 315 and an Mxd truncated horizontal transform matrix MCf$^T$ 335 obtained by respectively truncating the MxN vertical transform matrix Cf 310 and the MxN horizontal transform matrix Cf$^T$ 330. To acquire the axd transformed block 345 in the low frequency band, the truncated transform matrix acquisition unit 220 produces the axN truncated vertical transform matrix MCf 315 by selecting elements corresponding to a upper rows from the MxN vertical transform matrix Cf 310. The truncated transform matrix acquisition unit 220 produces the Mxd truncated horizontal transform matrix MCf$^T$ 335 by selecting elements corresponding to d left columns from the MxN horizontal transform matrix Cf$^T$ 330. For example, as illustrated in FIG. 3, assuming M and N are 16 and a and d are 8, the truncated transform matrix acquisition unit 220 acquires an 8x16 truncated vertical transform matrix by selecting only 8 upper rows from a 16x16 vertical transform matrix and a 16x8 truncated horizontal transform matrix by selecting only left 8 columns from a 16x16 horizontal transform matrix, thereby acquiring transformation coefficients corresponding to an 8x8 transformed block of a low frequency band. The frequency transformation unit 230 may produce the 8x8 transformed block via matrix operations among the 8x16 truncated vertical transform matrix, the 16x8 truncated horizontal transform matrix, and the 16x16 input block. For example, an 8x16 intermediate value is produced by applying the 8x16 truncated vertical transform matrix to the 16x16 input block, and the 8x8 transformed block corresponding to the low frequency band is finally acquired by applying the 16x8 truncated horizontal transform matrix to the 8x16 intermediate value.

Meanwhile, when the value of an element located at a (i,k) (where i and k are integers) position of a vertical transform matrix is Aik, the (i,k)th element Aik of the vertical transform matrix for transformation of an NxN input block may be defined as in Equation 1:

【Equation 1】

$$A_{ik} = \alpha_i \cos \frac{\pi(2k+1)i}{2N}$$

$$(i,k=0,...,N-1 \ , \quad \alpha_0 = \sqrt{\frac{1}{N}} \ , \quad \alpha_i = \sqrt{\frac{2}{N}} \quad )$$

Since a horizontal transform matrix is the transpose of the vertical transform matrix, an (i,k)th element Bik of the horizontal transform matrix is expressed as a value obtained using a cosine function, like the vertical transform matrix. In general, elements of such a transform matrix are not used in a transformation process, but products of the elements and a predetermined scaling coefficient may be used to perform a transformation process with only additions and a shift operation. Although a floating point DCT is illustrated in Equation 1, a fixed point DCT may be used. When the product of an element of a transform matrix and a predetermined scaling coefficient is used during transformation, a de-scaling process of dividing a transformation coefficient by the predetermined scaling coefficient may be additionally performed during quantization.

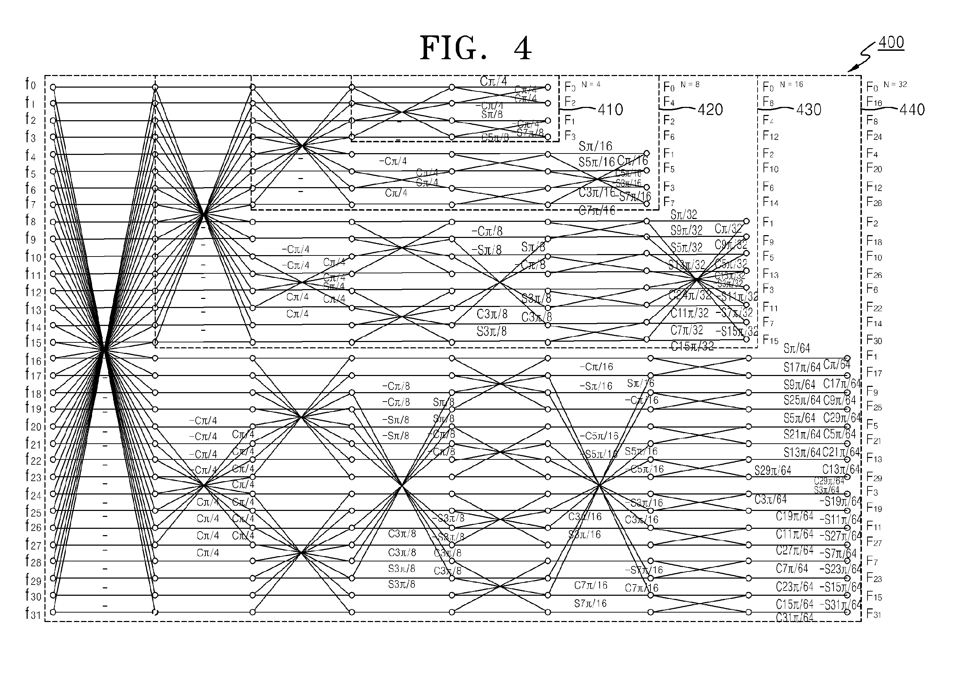

FIG. 4 is a flow graph 400 of 4-point, 8-point, 16-point, and 32-point DCT, according to an embodiment of the present invention.

Referring to FIG. 4, f0 through f31 denote input values of 1 D transform and at the same time, denote output values of 1 D inverse transform. A data processing direction during transformation is from left to right, and a processing direction during inverse transformation is from right to left. Two lines intersecting at a point denotes an addition of two numbers. A value above each line denotes a multiplication according to a corresponding coefficient. $c\theta$ denotes $\cos\theta$, $s\theta$ denotes $\sin\theta$, and '-' denotes negation. A reference numeral 410 indicating a dashed line is a flow graph of 4 point 1D DCT, a reference numeral 420 indicating a dashed line is a flow graph of 8 point 1D DCT, a reference numeral 430 indicating a dashed line is a flow graph of 16 point 1 D DCT, and a reference numeral 440 indicating a dashed line is a flow graph of 32 point 1 D DCT.

As shown in the flow graph 400, $c\theta$ and $s\theta$ may become irrational numbers according to a value of $\theta$ in the DCT, and thus, calculation complexity may increase. Accordingly, even if an input value is an integer, a final transform result value may be mapped to an irrational number. Such a process of the DCT may increase complexity when realized using hardware. Accordingly, the method according to an exemplary embodiment provides an integer transforming method of substituting irrational numbers used for DCT with rational numbers to be approximately close to a result value of original DCT. For example, a component $\cos(\pi x(i/2)/N)$ (where i denotes an integer ranging from 0 to N-1) of the elements constituting the NxN transform matrix may be substituted with N variables ai that are rational numbers. For example, when N=16, cos 0 may be substituted with a0, $\cos(\pi x(1/2)/16)$ may be substituted with a1, $\cos(\pi x(2/2)/16)$ may be substituted with a2, $\cos(\pi x(3/2)/16)$ may be substituted with a3, $\cos(\pi x(4/2)/16)$ may be substituted with a4, $\cos(\pi x(5/2)/16)$ may be substituted with a5, $\cos(\pi x(6/2)/16)$ may be substituted with a6, $\cos(\pi x(7/2)/16)$ may be substituted with a7, $\cos(\pi x(8/2)/16)$ may be substituted with a8, $\cos(\pi x(9/2)/16)$ may be substituted with a9, $\cos(\pi x(10/2)/16)$ may be substituted with a10, $\cos(\pi x(11/2)/16)$ may be substituted with a11, $\cos(\pi x(12/2)/16)$ may be substituted with a12, $\cos(\pi x(13/2)/16)$ may be substituted with a13, $\cos(\pi x(14/2)/16)$ may be substituted with a14, and $\cos(\pi x(15/2)/16)$ may be substituted with a15. The variables ai may be rational numbers, and a denominator of each variable ai may have a value of a power of 2 capable of a shift operation. The variable ai is limited to a dyadic rational because if the denominator is a power of 2, a division operation may be performed by only using a right shift operation (>>). For example, when N is 16, 16 variables ai may be the following values; a1=63/64, a2= 62/64, a3= 61/64, a4 = 59/64, a5 = 56/64, a6 = 53/64, a7 = 49/64, a8 = 45/64, a9 = 40/64, a10 = 35/64, a11 = 30/64, a12 = 24/64, a13 = 18/64, a14 = 12/64, and a15 = 6/64. When N is 32, 32 variables ai may be the following values; a1 = 255/256, a2 = 254/256, a3 = 253/256, a4 = 251/256, a5 = 248/256, a6 = 244/256, a7 = 241/256, a8 = 236/256, a9 = 231/256, a10 = 225/256, a11 = 219/256, a12 = 212/256, a13 = 205/256, a14 = 197/256, a15 = 189/256, a16 = 181/256, a17 = 171/256, a18 = 162/256, a19 = 152/256, a20 = 142/256, a21 = 131/256, a22 = 120/256, a23 = 109/256, a24 = 97/256, a25 = 86/256, a26 = 74/256, a27 = 62/256, a28 = 49/256, a29 = 37/256, a30 = 25/256, and a31 = 12/256.

When M and N are 32, X0 through X31 denote input values, Ai, Bi, Ci, Di, Ei, Fi, and Gi (where i denotes an integer ranging from 0 to 31) denote intermediate values, and Y0 through Y31 denote output values, the frequency transformation unit 230 produces a 16x16 transformed block of a low frequency band by repeating the following point transformation with respect to row-direction input values and column-direction input values of a 32x32 input block according to the flow graph 400 of FIG. 4: { /stage 0 A0 = X0 + X31;A31 = X0 - X31;A1 = X1 + X30;A30 = X1 - X30;A2 = X2 + X29;A29 = X2 - X29;A3 = X3 + X28;A28 = X3 - X28;A4 = X4 + X27;A27 = X4 - X27;A5 = X5 + X26;A26 = X5 - X26; A6 = X6 + X25;A25 = X6 - X25;A7 = X7 + X24;A24 = X7 - X24;A8 = X8 + X23;A23 = X8 - X23;A9 = X9 + X22;A22 = X9 - X22;A10 = X10 + X21;A21 = X10 - X21;A11 = X11 + X20;A20 = X11 - X20;A12 = X12 + X19;A19 = X12 - X19;A13 = X13 + X18;A18 = X13 - X18;A14 = X14 + X17;A17 = X14 - X17;A15 = X15 + X16;A16 = X15 - X16; /stage 1 B0 = A0 + A15;B15 = A0 - A15;B1 = A1 + A14;B14 = A1 - A14;B2 = A2 + A13;B13 = A2 - A13;B3 = A3 + A12;B12 = A3 - A12;B4 = A4 + A11;B11 = A4 - A11;B5 = A5 + A10;B10 = A5 - A10;B6 = A6 + A9;B9 = A6 - A9;B7 = A7 + A8;B8 = A7 - A8;B20 = ( 181 * ( A27 - A20 ) ) >> 8;B27 = ( 181 * ( A27 + A20 ) ) >> 8;B21 = ( 181 * ( A26 - A21 ) ) >> 8;B26 = ( 181 * ( A26 + A21 ) ) >> 8;B22 = ( 181 * ( A25-A22 ) ) >> 8;B25 = ( 181 * ( A25 + A22 ) ) >> 8;B23 = ( 181 * ( A24-A23 ) ) >> 8;B24 = ( 181 * ( A24 + A23 ) ) >> 8;

/Stage 2

C0 = B0 + B7;C7 = B0 - B7;C1 = B1 + B6;C6 = B1 - B6;C2 = B2 + B5;C5 = B2 - B5;C3 = B3 + B4;C4 = B3 - B4;C10 = ( 181 * ( B13 - B10 ) ) >> 8;C13 = ( 181 * ( B13 + B10 ) ) >> 8;C11 = ( 181 * ( B12 - B11 ) ) >> 8;C12 = ( 181 * ( B12 + B11 ) ) >> 8;C16 = A16 + B23;C23 = A16 - B23;C24 = A31 - B24;C31 = A31 + B24;C17 = A17 + B22;C22 = A17 - B22; C25 = A30 - B25;C30 = A30 + B25;C18 = A18 + B21;C21 = A18 - B21;C26 = A29 - B26;C29 = A29 + B26;C19 = A19 + B20;C20 = A19 - B20;C27 = A28 - B27;C28 = A28 + B27;

/stage 3

D0 = C0 + C3;D3 = C0 - C3;D8 = B8 + C11;D11 = B8 - C11;D12 = B15 - C12;D15 = B15 + C12;D1 = C1 + C2;D2 = C1 - C2;D9 = B9 + C10;D10 = B9 - C10;D13 = B14 - C13;D14 = B14 + C13;D5 = ( 181*( C6 - C5 ) ) >> 8;D6 = ( 181*( C6 + C5 ) ) >> 8;D18 = ( 97*C29 - 236*C18 ) » 8;D20 = ( - 236*C27 - 97*C20 ) >> 8;D26 = (- 236*C21 + 97*C26 ) » 8;D28 = ( 97*C19 + 236*C28 ) >> 8;D19 = ( 97*C28 - 236*C19 ) >> 8;D21 = ( - 236*C26 - 97*C21 ) >> 8;D27 = (- 236*C20 + 97*C27 ) >> 8;D29 = ( 97*C18 + 236*C29 ) » 8;

/stage 4

Y0 = ( 181 * ( D0 + D1 ) ) >> 8;Y8 = ( 236 * D3 + 97 * D2 ) >> 8; E4 = C4 + D5;E5 = C4 - D5;E6 = C7 - D6;E7 = C7 + D6;E9 = ( 97*D14 - 236*D9 ) >> 8;E10 = (- 236*D13 - 97*D10 ) >> 8;E13 = ( 97*D13 - 236*D10 ) >> 8;E14 = ( 236*D14 + 97*D9 ) >> 8;E16 = C16 + D19;E19 = C16 - D19;E20 = C23 - D20;E23 = C23 + D20;E24 = C24 + D27;E27 = C24 - D27;E28 = C31 - D28;E31 = C31 + D28;E17 = C17 + D18;E18 = C17 - D18;E21 = C22 - D21;E22 = C22 + D21;E25 = C25 + D26;E26 = C25 - D26;E29 = C30 - D29;E30 = C30 + D29;

/Stage 5

Y4 = ( 49 * E4 + 251 * E7 ) >> 8;Y12 = ( 212 * E6 - 142 * E5 ) >> 8;F8 = D8 + E9;F9 = D8 - E9;F10 = D11 - E10;F11 = D11 + E10;F12 = D12 + E13;F13 = D12 - E13;F14 = D15 - E14;F15 = D15 + E14;F17 = ( 49 * E30 - 251 * E17 ) >> 8; F18 = ( - 251*E29 - 49*E18 ) >> 8;F21 = ( 212*E26 - 142*E21 ) >> 8;F22 = ( - 142*E25 - 212*E22 ) >> 8;F25 = ( 212*E25 - 142*E22 ) >> 8;F26 = ( 142*E26 + 212*E21 ) >> 8;F29 = ( 49*E29 - 251*E18 ) >> 8;F30 = ( 251*E30 + 49*E17 ) >> 8;;

/stage 6

Y2 = ( 25 * F8 + 254 * F15 ) >> 8;Y10 = ( 120*F10 + 225*F13 ) >> 8;Y6 = ( 244 * F12 - 74 * F11 ) >> 8;Y14 = ( 197*F14 - 162*F9 ) >> 8;G16 = E16 + F17;G17 = E16 - F17;G18 = E19 - F18;G19 = E19 + F18;G20 = E20 + F21;G21 = E20 - F21;G22 = E23 - F22;G23 = E23 + F22;G24 = E24 + F25;G25 = E24 - F25;G26 = E27 - F26;G27 = E27 + F26;G28 = E28 + F29;G29 = E28 - F29;G30 = E31 - F30;G31 = E31 + F30;

/stage 7

Y1 = ( 12 * G16 + 255 * G31 ) >> 8;Y9 = ( 109 * G18 + 231 * G29 ) >> 8;Y5 = ( 62 * G20 + 248 * G27 ) >> 8;Y13 = ( 152*G22 + 205*G25 ) >> 8;Y3 = ( 253 * G24 - 37 * G23 ) >> 8;Y11 = ( 219*G26 - 131*G21 ) >> 8;Y7 = ( 241 * G28 - 86 * G19 ) >> 8;Y15 = ( 189*G30 - 171*G17 ) >> 8;Y16 = 0;Y17 = 0;Y18 = 0;Y19 = 0;Y20 = 0;Y21 = 0;Y22 = 0;Y23 = 0; Y24 = 0;Y25 = 0;Y26 = 0;Y27 = 0;Y28 = 0;Y29 = 0;Y30 = 0;Y31 = 0; }

For example, the frequency transformation unit 230 produces a 16x32 intermediate value matrix by repeating the above-described point transformation 32 times by applying each columns of 32 columns of the 32x32 input block as the input values X0 through X31, and acquires a 16x16 transform matrix by repeating the above-described point transformation 16 times by applying 16 rows constituting the 16x32 intermediate value matrix as the input values X0 through X31. The 16x16 transform matrix corresponds to the 16x16 transformed block of the low frequency band in a 32x32 transform matrix.

When M and N are 64, X0 through X63 denote input values, Ai, Bi, Ci, Di, Ei, Fi, Gi, Hi, and Zi (where i denotes an integer ranging from 0 to 63) denote intermediate values, and Y0 through Y63 denote output values, the frequency transformation unit 320 produces a 16x16 transformed block by repeating the following point transformation with respect to row-direction input values and column-direction input values of a 64x64 input block: {

/stage 0

Z0 = X0+X63;263 = X0-X63;Z1 = X1+X62;Z62 = X1-X62;Z2 = X2+X61;Z61 = X2-X61;Z3 = X3+X60;Z60 = X3-X60;Z4 = X4+X59;Z59 = X4-X59;Z5 = X5+X58;Z58 = X5-X58;Z6 = X6+X57;Z57 = X6-X57;Z7 = X7+X56;Z56 = X7-X56;Z8 = X8+X55;Z55 = X8-X55;Z9 = X9+X54;Z54 = X9-X54;Z10 = X10+X53;Z53 = X10-X53;Z11 = X11+X52;Z52 = X11-X52; Z12 = X12+X51;Z51 = X12-X51;Z13 = X13+X50;Z50 = X13-X50;Z14 = X14+X49;Z49 = X14-X49;Z15 = X15+X48;Z48 = X15-X48;Z16 = X16+X47;Z47 = X16-X47;Z17 = X17+X46;Z46 = X17-X46;Z18 = X18+X45;Z45 = X18-X45;Z19 = X19+X44;Z44 = X19-X44;Z20 = X20+X43;Z43 = X20-X43;Z21 = X21+X42;Z42 = X21-X42;Z22 = X22+X41;Z41 = X22-X41;Z23 = X23+X40;Z40 = X23-X40;Z24 = X24+X39;Z39 = X24-X39;Z25 = X25+X38;Z38 = X25-X38;Z26 = X26+X37; Z37 = X26-X37;Z27 = X27+X36;Z36 = X27-X36;Z28 = X28+X35;Z35 = X28-X35;Z29 = X29+X34;Z34 = X29-X34;Z30 = X30+X33;Z33 = X30-X33;Z31 = X31+X32;Z32 = X31-X32;

/stage 1

A0 = Z0+Z31;A31 = Z0-Z31;A1 = Z1+Z30;A30 = Z1-Z30;A2 = Z2+Z29;A29 = Z2-Z29;A3 = Z3+Z28;A28 = Z3-Z28;A4 = Z4+Z27;A27 = Z4-Z27;A5 = Z5+Z26;A26 = Z5-Z26;A6 = Z6+Z25;A25 = Z6-Z25;A7 = Z7+Z24;A24 = Z7-Z24;A8 = Z8+Z23; A23 = Z8-Z23;A9 = Z9+Z22;A22 = Z9-Z22;A10 = Z10+Z21;A21 = Z10-Z21;A11 = Z11+Z20;A20 = Z11-Z20;A12 = Z12+Z19;A19 = Z12-Z19;A13 = Z13+Z18;A18 = Z13-Z18;A14 = Z14+Z17;A17 = Z14-Z17;A15 = Z15+Z16;A16 = Z15-Z16;A40 = (724*(Z55-Z40)) >> 10;A55 = (724*(Z55+Z40)) >> 10;A41 = (724*(Z54-Z41)) >> 10;A54 = (724*(Z54+Z41)) >> 10;A42 = (724*(Z53-Z42)) >> 10;A53 = (724*(Z53+Z42)) >> 10;A43 = (724*(Z52-Z43)) >> 10;A52 = (724*(Z52+Z43)) >> 10;A44 = (724*(Z51-Z44)) >> 10;A51 = (724*(Z51+Z44)) >> 10;A45 = (724*(Z50-Z45)) >> 10;A50 = (724*(Z50+Z45)) >> 10;A46 = (724*(Z49-Z46)) >> 10;A49 = (724*(Z49+Z46)) >> 10;A47 = (724*(Z48-Z47)) >> 10;A48 = (724*(Z48+Z47)) >> 10;

/stage 2

B0 = A0+A15;B15 = A0-A15;B1 = A1+A14;B14 = A1-A14;B2 = A2+A13;B13 = A2-A13;B3 = A3+A12;B12 = A3-A12;B4 = A4+A11;B11 = A4-A11;B5 = A5+A10;B10 = A5-A10;B6 = A6+A9;B9 = A6-A9;B7 = A7+A8;B8 = A7-A8;B20 = (724* (A27-A20)) >> 10;B27 = (724*(A27+A20)) >> 10;B21 = (724*(A26-A21)) >> 10;B26 = (724*(A26+A21)) >> 10;B22 = (724*(A25-A22)) >> 10;B25 = (724*(A25+A22)) >> 10;B23 = (724*(A24-A23)) » 10;B24 = (724*(A24+A23)) >> 10;B32 = Z32+A47;B47 = Z32-A47;B48 = Z63-A48;B63 = Z63+A48;B33 = Z33+A46;B46 = Z33-A46;B49 = Z62-A49;B62 = Z62+A49;B34 = Z34+A45;B45 = Z34-A45;B50 = Z61-A50;B61 - Z61+A50;B35 = Z35+A44;B44 = Z35-A44;B51 = Z60-A51;B60 = Z60+A51;B36 = Z36+A43;B43 = Z36-A43;B52 = Z59-A52;B59 = Z59+A52;B37 = Z37+A42;B42 = Z37-A42;B53 = Z58-A53;B58 = Z58+A53;B38 = Z38+A41;B41 = Z38-A41;B54 = Z57-A54;B57 = Z57+A54;B39 = Z39+A40;B40 = Z39-A40;B55 = Z56-A55;B56 = Z56+A55;

/stage 3

C0 = B0+B7;C7 = B0-B7;C1 = B1+B6;C6 = B1-B6;C2 = B2+B5;C5 = B2-B5;C3 = B3+B4;C4 = B3-B4;C10 = (724*(B13-B10)) >> 10;C13 = (724*(B13+B10)) >> 10;C11 = (724*(B12-B11)) >> 10;C12 = (724*(B12+B11)) >> 10;C16 = A16+B23;C23 = A16-B23;C24 = A31-B24;C31 = A31+B24;C17 = A17+B22;C22 = A17-B22;C25 = A30-B25;C30 = A30+B25;C18 = A18+B21;C21 = A18-B21;C26 = A29-B26;C29 = A29+B26;C19 = A19+B20;C20 = A19-B20;C27 = A28-B27;C28 = A28+B27;C36 = (392*B59-946*B36) >> 10;C40 = (-946*B55-392*B40) >> 10;C52 = (-946*B43+392*B52) » 10;C56 = (392*B39+946*B56) >> 10;C37 = (392*B58-946*B37) >> 10;C41 = (-946*B54-392*B41) >> 10;C53 = (-946*B42+392*B53) >> 10;C57 = (392*B38+946*B57) » 10;C38 = (392*B57-946*B38) >> 10;C42 = (-946*B53-392*B42) >> 10;C54 = (-946*B41+392*B54) >> 10;C58 = (392*B37+946*B58) >> 10;C39 = (392*B56-946*B39) » 10;C43 = (-946*B52-392*B43) >> 10;C55 = (-946*B40+392*B55) >> 10;C59 = (392*B36+946*B5₉) >> 10;

/stage 4

D0 = C0+C3;D3 = C0-C3;D8 = B8+C11;D11 = B8-C11;D12 = B15-C12;D15 = B15+C12;D1 = C1+C2;D2 = C1-C2;D9 = B9+C10;D10 = B9-C10;D13 = B14-C13;D14 = B14+C13;D5 = (724*(C6-C5)) >> 10;D6 = (724*(C6+C5)) >> 10;D18 = (392*C29-946*C18) >> 10;D20 = (-946*C27-392*C20) >> 10;D26 = (-946*C21+392*C26) >> 10;D28 = (392*C19+946*C28) >> 10;D19 = (392*C28-946*C19) >> 10;D21 = (-946*C26-392*C21) >> 10;D27 = (-946*C20+392*C27) >> 10;D29 = (392*C18+946*C29) » 10;D32 = B32+C39;D39 = B32-C39;D40 = B47-C40;D47 = B47+C40;D48 = B48+C55;D55 = B48-C55;D56 = B63-C56;D63 = B63+C56;D33 = B33+C38;D38 = B33-C38;D41 = B46-C41;D46 = B46+C41;D49 = B49+C54;D54 = B49-C54;D57 = B62-C57;D62 = B62+C57;D34 = B34+C37;D37 = B34-C37;D42 = B45-C42;D45 = B45+C42;D50 = B50+C53;D53 = B50-C53;D58 = B61-C58;D61 = B61+C58;D35 = B35+C36;D36 = B35-C36;D43 = B44-C43;D44 = B44+C43;D51 = B51+C52;D52 = B51-C52;D59 = B60-C59;D60 = B60+C59;

/stage 5

Y0 = (724*(D0+D1)) >> 10; E4 = C4+D5;E5 = C4-D5;E6 = C7-D6;E7 = C7+D6;E9 = (392*D14-946*D9) >> 10;E10 = (-946*D13-392*D10) >> 10;E13 = (392*D13-946*D10) >> 10;E14 = (946*D14+392*D9) » 10;D15 = D15;E16 = C16+D19;E19 = C16-D19;E20 = C23-D20;E23 = C23+D20;E24 = C24+D27;E27 = C24-D27;E28 = C31-D28;E31 = C31+D28;E17 = C17+D18;E18 = C17-D18;E21 = C22-D21;E22 = C22+D21;E25 = C25+D26;E26 = C25-D26;E29 = C30-D29;E30 = C30+D29;E34 = (200*D61-1004*D34) >> 10;E35 = (200*D60-1004*D35) » 10;E36 = (-1004*D59-200*D36) >> 10;E37 = (-1004*D58-200*D37) >> 10;E42 = (851*D53-569*D42) >> 10;E43 = (851*D52-569*D43) >> 10;E44 = (-569*D51-851*D44) » 10;E45 = (-569*D50-851*D45) >> 10;E50 = (851*D50-569*D45) >> 10;E51 = (851*D51-569*D44) >> 10;E52 = (569*D52+851*D43) >> 10;E53 = (569*D53+851*D42) » 10;E58 = (200*D58-1004*D37) >> 10;E59 = (200*D59-1004*D36) >> 10;E60 = (1004*D60+200*D35) >> 10;E61 = (1004*D61+200*D34) >> 10;

/stage 6

Y8 = (200*E4+1004*E7) >> 10; F8 = D8+E9;F9 = D8-E9;F10 = D11-E10;F11 = D11+E10;F12 = D12+E13;F13 = D12-E13;F14 = D15-E14;F15 = D15+E14;F17 = (200*E30-1004*E17) >> 10;F18 = (-1004*E29-200*E18) >> 10;F21 = (851*E26-569*E21) >> 10;F22 = (-569*E25-851*E22) » 10;F25 = (851*E25-569*E22) >> 10;F26 = (569*E26+851*E21) >> 10;F29 = (200*E29-1004*E18) >> 10;F30 = (1004*E30+200*E17) >> 10;F32 = D32+E35;F33 = D33+E34;F34 = D33-E34;F35 = D32-E35;F36 = D39-E36;F37 = D38-E37;F38 = D38+E37;F39 = D39+E36;F40 = D40+E43;F41 = D41+E42;F42 = D41-E42;F43 = D40-E43;F44 = D47-E44;F45 = D46-E45;F46 = D46+E45;F47 = D47+E44;F48 = D48+E51;F49 = D49+E50;F50 = D49-E50;F51 = D48-E51;F52 = D55-E52;F53 = D54-E53;F54 = D54+E53;F55 = D55+E52;F56 = D56+E59;F57 = D57+E58;F58 = D57-E58;F59 = D56-E59;F60 = D63-E60;F61 = D62-E61;F62 = D62+E61;F63 = D63+E60;

/stage 7

Y4 = (100*F8+1019*F15) >> 10;Y12 = (980*F12-297*F11) >> 10; G16 = E16+F17;G17 = E16-F17;G18 = E19-F18;G19 = E19+F18;G20 = E20+F21;G21 = E20-F21;G22 = E23-F22;G23 = E23+F22;G24 = E24+F25;G25 = E24-F25;G26 = E27-F26;G27 = E27+F26;G28 = E28+F29;G29 = E28-F29;G30 = E31-F30;G31 = E31+F30;G33 = (100*F62-1019*F33) >> 10;G34 = (-1019*F61-100*F34) >> 10;G37 = (792*F58-650*F37) >> 10;G38 = (-650*F57-792*F38) >> 10;G41 = (483*F54-903*F41) >> 10;G42 = (-903*F53-483*F42) >> 10;G45 = (980*F50-297*F45) >> 10;G46 = (-297*F49-980*F46) >> 10;G49 = (980*F49-297*F46) >> 10;G50 = (297*F50+980*F45) >> 10;G53 = (483*F53-903*F42) >> 10;G54 = (903*F54+483*F41) >> 10;G57 = (792*F57-650*F38) >> 10;G58 = (650*F58+792*F37) >> 10;G61 = (100*F61-1019*F34) » 10;G62 = (1019*F62+100*F33) >> 10;

/stage 8

Y2 = (50*G16+1023*G31) >> 10;Y10 = (249*G20+993*G27) >> 10;Y6 = (1013*G24-150*G23) >> 10;Y14 = (964*G28-345*G19) >> 10;H32 = F32+G33;H33 = F32-G33;H34 = F35-G34;H35 = F35+G34;H36 = F36+G37;H37 = F36-G37;H38 = F39-G38;H39 = F39+G38;H40 = F40+G41;H41 = F40-G41;H42 = F43-G42;H43 = F43+G42;H44 = F44+G45;H45 = F44-G45;H46 = F47-G46;H47 = F47+G46;H48 = F48+G49;H49 = F48-G49;H50 = F51-G50;H51 = F51+G50;H52 = F52+G53;H53 = F52-G53;H54 = F55-G54;H55 = F55+G54;H56 = F56+G57;H57 = F56-G57;H58 = F59-G58;H59 = F59+G58;H60 = F60+G61;H61 = F60-G61;H62 = F63-G62;H63 = F63+G62;

/stage 9

Y1 = (25*H32+1024*H63) >> 10;Y9 = (224*H36+999*H59) >> 10;Y5 = (125*H40+1016*H55) >> 10;Y13 = (321*H44+972*H51) >> 10;Y3 = (1021*H48-75*H47) >> 10;Y11 = (987*H52-273*H43) >> 10;Y7 = (1009*H56-175*H39) >> 10;Y15 = (955*H60-369*H35) >> 10;Y16 = 0;Y17 = 0;Y18 = 0;Y19 = 0;Y20 = 0;Y21 = 0;Y22 = 0;Y23 = 0;Y24 = 0; Y25 = 0;Y26 = 0;Y27 = 0;Y28 = 0;Y29 = 0;Y30 = 0;Y31 = 0;Y32 = 0;Y33 = 0;Y34 = 0;Y35 = 0;Y36 = 0;Y37 = 0;Y38 = 0; Y39 = 0;Y40 = 0;Y41 = 0;Y42 = 0;Y43 = 0;Y44 = 0;Y45 = 0;Y46 = 0;Y47 = 0;Y48 = 0;Y49 = 0;Y50 = 0;Y51 = 0;Y52 = 0; Y53 = 0;Y54 = 0;Y55 = 0;Y56 = 0;Y57 = 0;Y58 = 0;Y59 = 0;Y60 = 0;Y61 = 0;Y62 = 0;Y63 = 0; }

For example, the frequency transformation unit 230 produces a 16x64 intermediate value matrix by repeating the above-described point transformation 64 times by applying each column of 64 columns of the 64x64 input block as the input values X0 through X63, and acquires a 16x16 transform matrix by repeating the above-described point transformation 16 times by applying 16 rows constituting the 16x64 intermediate value matrix as the input values X0 through X63. The 16x16 transform matrix corresponds to the 16x16 transformed block of the low frequency band in a 64x64 transform matrix.

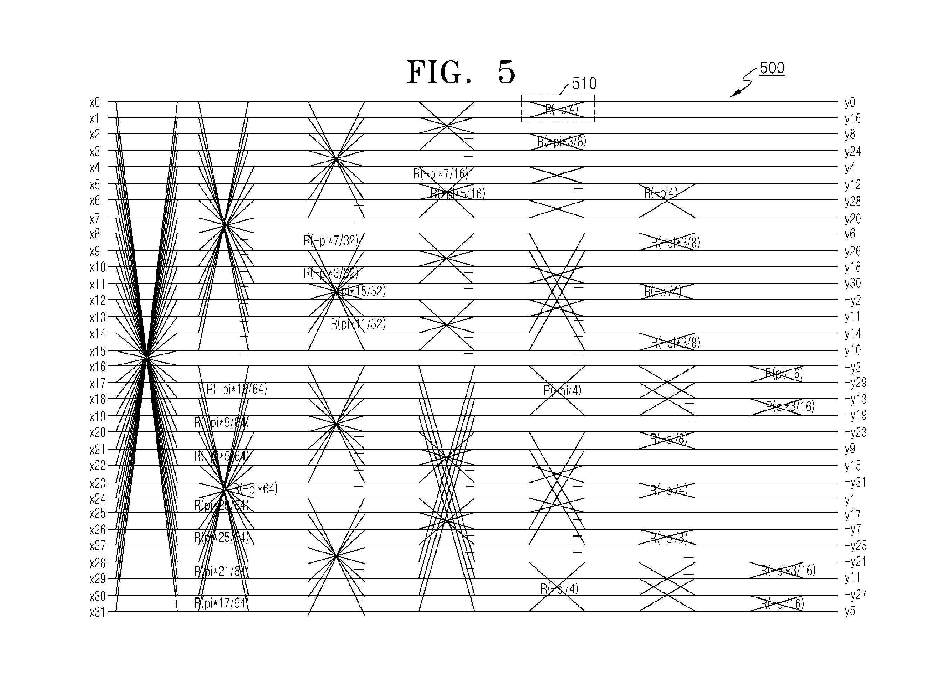

FIG. 5 is a flow graph 500 of 32-point DCT according to another embodiment of the present invention.

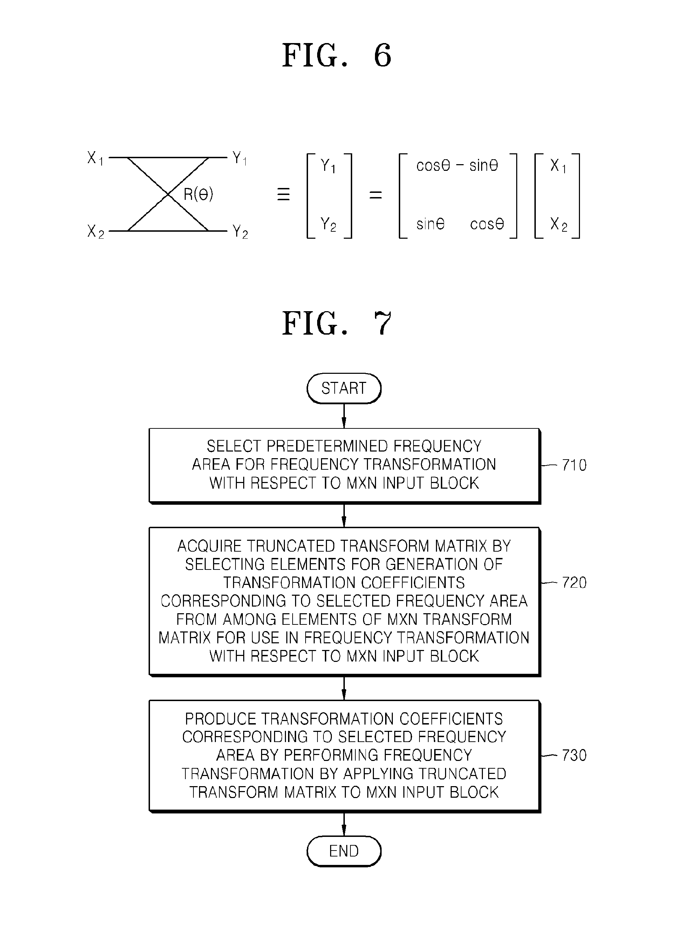

Referring to FIG. 5, x0 through x31 denote input values, and y0 through y31 denote output values of DCT. A data processing direction during transformation is from left to right, and a processing direction during inverse transformation is from right to left. 2 lines intersecting at a point denotes an addition of two numbers, and '-' denotes a negation. A value R(θ) above each line denotes an operation process based on a butterfly structure as shown in FIG. 6.

FIG. 6 is a reference diagram of an operation process of a butterfly structure forming the 32-point DCT of FIG. 5. Referring to FIG. 6, the operation process of the butterfly structure outputs an output value [Y1, Y2] via the equation

$$\begin{bmatrix} Y1 \\ Y2 \end{bmatrix} = \begin{bmatrix} \cos\theta & -\sin\theta \\ \sin\theta & \cos\theta \end{bmatrix} \begin{bmatrix} X1 \\ X2 \end{bmatrix}$$

with respect to an input value [X1,X2].

When DCT is performed according to the flow graph 500 of FIG. 5, cosθ and sinθ are used according to the value R(θ). Similar to the DCT using the flow graph 400 of FIG. 4, operations required by DCT may be replaced with additions, subtractions, and a shift operation by using a dyadic rational as cosθ and sinθ according to a value of θ.

For example, when M and N are 32, X0 through X31 denote input values, Ai, Bi, Ci, Di, Ei, Fi, and Zi (where i denotes an integer ranging from 0 to 31) denote intermediate values, and Y0 through Y31 denote output values, the frequency transformation unit 230 produces a 16x16 transformed block of a low frequency band by repeating the following point transformation with respect to row-direction input values and column-direction input values of a 32x32 input block according to the algorithm of FIG. 5: {

/stage 0

Z0 = X0 + X31; Z31 = X0 - X31;Z1 = X1 + X30;Z30 = X1 - X30;Z2 = X2 + X29;Z29 = X2 - X29;Z3 = X3 + X28;Z28 = X3 - X28;Z4 = X4 + X27;Z27 = X4 - X27;Z5 = X5 + X26;Z26 = X5 - X26;Z6 = X6 + X25;Z25 = X6 - X25;Z7 = X7 + X24;Z24 = X7 - X24;Z8 = X8 + X23;Z23 = X8 - X23;Z9 = X9 + X22;Z22 = X9 - X22;Z10 = X10 + X21;Z21 = X10 - X21;Z11 = X11 + X20;Z20 = X11 - X20;Z12 = X12 + X19;Z19 = X12 - X19;Z13 = X13 + X18;Z18 = X13 - X18;Z14 = X14 + X17;Z17 = X14 - X17;Z15 = X15 + X16;Z16 = X15 - X16;

/stage 1

A0 = Z0 + Z15;A1 = Z1 + Z14;A2 = Z2 + Z13;A3 = Z3 + Z12;A4 = Z4 + Z11;A5 = Z5 + Z10;A6 = Z6 + Z9;A7 = Z7 + Z8; A8 = Z7 - Z8;A9 = Z6 - Z9;A10 = Z5 - Z10;A11 = Z4 - Z11;A12 = Z3 - Z12;A13 = Z2 - Z13;A14 = Z1 - Z14;A15 = Z0 - Z15;A16 = (171*Z16 - 189*Z31) >> 8;A31 = (189*Z16 + 171*Z31) >> 8;A17 = (205*Z17 + 152*Z30) >> 8;A30 = (-152*Z17 + 205*Z30) >> 8;A18 = (131*Z18 - 219*Z29) >> 8;A29 = (219*Z18 + 131*Z29) >> 8;A19 = (231*Z19 + 109*Z28) >> 8; A28 = (-109*Z19 + 231*Z28) >> 8;A20 = (86*Z20 - 241*Z27) >> 8;A27 = (241*Z20 + 86*Z27) >> 8;A21 = (248*Z21 + 62*Z26) >> 8;A26 = (-62*Z21 + 248*Z26) >> 8;A22 = (37*Z22 - 253*Z25) >> 8;A25 = (253*Z22 + 37*Z25) >> 8;A23 = (255*Z23 + 12*Z24) >> 8;A24 = (-12*Z23 + 255*Z24) >> 8;

/stage 2

B0 = A0 + A7;B7 = A0 - A7;B1 = A1 + A6;B6 = A1 - A6;B2 = A2 + A5;B5 = A2 - A5;B3 = A3 + A4;B4 = A3 - A4;B8 = (197*A8 + 162*A15) >> 8;B15 = (-162*A8 + 197*A15) >> 8;B9 = (120*A9 - 225*A14) >> 8;B14 = (225*A9 + 120*A14) >> 8;B10 = (244*A10 + 74*A13) >> 8;B13 = (-74*A10 + 244*A13) >> 8;B11 = (25*A11 - 254*A12) >> 8;B12 = (254*A11 + 25*A12) >> 8;B16 = A16 + A23;B23 = A16 - A23;B17 = A17 + A22;B22 = A17 - A22;B18 = A18 + A21;B21 = A18 - A21;B19 = A19 + A20;B20 = A19 - A20;B24 = A24 + A31;B31 = A24 - A31;B25 = A25 + A30;B30 = A25 - A30;B26 = A26 + A29;B29 = A26 - A29;B27 = A27 + A28;B28 = A27 - A28;

/stage 3

C0 = B0 + B3;C3 = B0 - B3;C1 = B1 + B2;C2 = B1 - B2;C4 = (49*B4 + 251*B7) >> 8;C7 = (-251*B4 + 49*B7) >> 8;C5 = (142*B5 + 212*B6) >> 8;C6 = (-212*B5 + 142*B6) >> 8;C8 = B8 + B11;C11 = B8 - B11;C9 = B9 + B10;C10 = B9 - B10;C12 = B12 + B15;C15 = B12 - B15;C13 = B13 + B14;C14 = B13 - B14;C16 = B16 + B28;C28 = B16 - B28;C17 = B17 + B29;C29 = B17 - B29;C18 = B18 + B30;C30 = B18 - B30;C19 = B19 + B31;C31 = B19 - B31;C20 = B20 + B23;C23 = B20 - B23;C21 = B21 + B22;C22 = B21 - B22;C24 = B24 + B27;C27 = B24 - B27;C25 = B25 + B26;C26 = B25 - B26;

/stage 4

D0 = (181*(C0 + C1)) >> 8;D2 = (97*C2 + 236*C3) >> 8; D4 = C4 + C5;D5 = C4 - C5;D7 = C6 + C7; D8 = C8 + C14; D14 = C8 - C14;D9 = C9 + C15;D15 = C9 - C15;D11 = C10 - C11;D12 = C12 + C13;D13 = C12 - C13; D16 = (181*(C16 + C19)) >> 8;D19 = (181*(-C16 + C19)) >> 8;D20 = C20 + C26;D26 = C20 - C26;D21 = C21 + C27;D27 = C21 - C27; D22 = C22 + C23;D23 = C22 - C23;D24 = C24 + C25;D28 = (181*(C28 + C31)) >> 8;D31 = (181*(-C28 + C31)) >> 8;

/stage 5

E5 = (181*(D5 + D7)) >> 8;E8 = (97*D8 - 236*D9) >> 8;E12 = (181*(-D11 + D12)) >> 8;E15 = (236*D14 + 97*D15) >> 8;E16 = D16 + C18;E18 = D16 - C18;E17 = C17 + D19;E19 = C17 - D19;E21 = (-97*D20 + 236*D21) >> 8;E24 = (181*(-D23 + D24)) >> 8;E26 = (236*D26 + 97*D27) >> 8;E30 = D28 + C30;E29 =- C29 + D31;E31 = C29 + D31;

/stage 6

F16 = (251*E16 - 49*E17) >> 8;F18 = (212*E18 - 142*E19) >> 8;F28 = (212*E28 - 142*E29) >> 8;F29 = (142*E28 + 212*E29) >> 8;F31 = (49*E30 + 251*E31) >> 8;

/stage 7

Y0 = D0;Y1 = E24;Y2 = E12;Y3 = -F16;Y4 = D4;Y5 = F31;Y6 = E8;Y7 = -E26;Y8 = D2;Y9 = E21;Y10 = E15;Y11 = F29;Y12 = E5;Y13 = -F18;Y14 = D13;Y15 = D22;Y16 = 0;Y17 = 0;Y18 = 0;Y19 = 0;Y20 = 0;Y21 = 0;Y22 = 0;Y23 = 0;Y24 = 0;Y25 = 0;Y26 = 0;Y27 = 0;Y28 = 0;Y29 = 0;Y30 = 0;Y31 = 0; }

For example, the frequency transformation unit 230 produces a 16x32 intermediate value matrix by repeating the above-described point transformation 32 times by applying each column of 64 columns of the 32x32 input block as the input values X0 through X31, and acquires a 16x16 transform matrix by repeating the above-described point transformation 16 times by applying 16 rows constituting the 16x32 intermediate value matrix as the input values X0 through X31. The 16x16 transform matrix corresponds to the 16x16 transformed block of the low frequency band in a 64x64 transform matrix.

When M and N are 32, X0 through X31 denote input values, $A_i$, $B_i$, $C_i$, $D_i$, $E_i$, $F_i$, and $Z_i$ (where i denotes an integer ranging from 0 to 31) denote intermediate values, and Y0 through Y31 denote output values, the frequency transformation unit 230 produces a transformed block by repeating the following point transformation with respect to row-direction input values and column-direction input values of a 32x32 input block according to the algorithm of FIG. 5: { /stage 0 Z0 = X0 + X31;Z31 = X0 - X31;Z1 = X1 + X30;Z30 = X1 - X30;Z2 = X2 + X29;Z29 = X2 - X29;Z3 = X3 + X28;Z28 = X3 - X28;Z4 = X4 + X27;Z27 = X4 - X27;Z5 = X5 + X26;Z26 = X5 - X26;Z6 = X6 + X25;Z25 = X6 - X25;Z7 = X7 + X24;Z24 = X7 - X24;Z8 = X8 + X23;Z23 = X8 - X23;Z9 = X9 + X22;Z22 = X9 - X22;Z10 = X10 + X21;Z21 = X10 - X21;Z11 = X11 + X20;Z20 = X11 - X20;Z12 = X12 + X19;Z19 = X12 - X19;Z13 = X13 + X18;Z18 = X13 - X18;Z14 = X14 + X17;Z17 = X14 - X17;Z15 = X15 + X16;Z16 = X15 - X16;

/stage 1

A0 = Z0 + Z15;A1 = Z1 + Z14;A2 = Z2 + Z13;A3 = Z3 + Z12;A4 = Z4 + Z11;A5 = Z5 + Z10;A6 = Z6 + Z9;A7 = Z7 + Z8; A8 = Z7 - Z8;A9 = Z6 - Z9;A10 = Z5 - Z10;A11 = Z4 - Z11;A12 = Z3 - Z12;A13 = Z2 - Z13;A14 = Z1 - Z14;A15 = Z0 - Z15; A16 = Z16 - (113*Z31 >> 8);A31 = Z31 + (189*A16 >> 8);A16 = A16 - (113*A31 >> 8);A17 = Z17 + (84*Z30 >> 8);A30 = Z30 - (152*A17 >> 8);A17 = A17 + (84*A30 >> 8);A18 = Z18 - (145*Z29 >> 8);A29 = Z29 + (219*A18 >> 8);A18 = A18 - (145*A29 >> 8);A19 = Z19 + (57*Z28 >> 8);A28 = Z28 - (109*A19 >> 8);A19 = A19 + (57*A28 >> 8);A20 = Z20 - (180*Z27 >> 8);A27 = Z27 + (241*A20 >> 8);A20 = A20 - (180*A27 >> 8);A21 = Z21 + (31*Z26 >> 8);A26 = Z26 - (62*A21 >> 8);A21 = A21 + (31*A26 >> 8);A22 = Z22 - (220*Z25 >> 8);A25 = Z25 + (253*A22 >> 8);A22 = A22 - (220*A25 >> 8);A23 = Z23 + (6*Z24 >> 8);A24 = Z24 - (12*A23 >> 8);A23 = A23 + (6*A24 >> 8);

/stage 2

B0 = A0 + A7;B7 = A0 - A7;B1 = A1 + A6;B6 = A1 - A6;B2 = A2 + A5;B5 = A2 - A5;B3 = A3 + A4;B4 = A3 - A4; B8 = A8 + (91*A15 >> 8);B15 = A15 - (162*B8 >> 8);B8 = B8 + (91*B15 >> 8);B9 = A9 - (153*A14 >> 8);B14 = A14 + (225*B9 >> 8);B9 = B9 - (153*B14 >> 8);B10 = A10 + (37*A13 >> 8);B13 = A13 - (74*B10 >> 8);B10 = B10 + (37*B13 >> 8);B11 = A11 - (232*A12 >> 8);B12 = A12 + (254*B11 >> 8);B11 = B11 - (232*B12 >> 8); B16 = A16 + A23;B23 = A16 - A23;B17 = A17 + A22;B22 = A17 - A22;B18 = A18 + A21;B21 = A18 - A21;B19 = A19 + A20;B20 = A19 - A20; B24 = A24 + A31;B31 = A24 - A31;B25 = A25 + A30;B30 = A25 - A30;B26 = A26 + A29;B29 = A26 - A29;B27 = A27 + A28;B28 = A27 - A28;

/stage 3 C0 = B0 + B3;C3 = B0 - B3;C1 = B1 + B2;C2 = B1 - B2; C4 = B4 + (210*B7 >> 8);C7 = B7 - (251*C4 >> 8);C4 = C4 + (210*C7 >> 8);C5 = B5 + (136*B6 >> 8);C6 = B6 - (212*C5 >> 8);C5 = C5 + (136*C6 >> 8); C8 = B8 + B11;C11 = B8 -B 11;C9 = B9 + B10;C10 = B9 - B10; C12 = B12 + B15;C15 = B12 - B15;C13 = B13 + B14;C14 = B13 - B14; C16 = B16 + B28;C28 = B16 - B28;C17 = B17 + B29;C29 = B17 - B29;C18 = B18 + B30;C30 = B18 - B30;C19 = B19 + B31;

C31 = B19 - B31; C20 = B20 + B23;C23 = B20 - B23;C21 = B21 + B22;C22 = B21 - B22; C24 = B24 + B27;C27 = B24 - B27;C25 = B25 + B26;C26 = B25 - B26;
/stage 4
D0 = C0 + C1; D3 = C2 - (106*C3 >> 8);D2 = C3 + (90*D3 >> 8); D4 = C4 + C5;D5 = C4 - C5; D7 = C6 + C7; D8 =C8 + C14;D14 = C8 - C14;D9 =C9 + C15;D15 = C9 - C15; D11 = C10 - C11;D12 = C12 + C13;D13 = C12 - C13; D16 = C16 + (106*C19 >> 8);D19 = C19 - (181*D16 >> 8);D16 = D16 + (106*D19 >> 8);D20 = C20 + C26;D26 = C20 - C26; D21 = C21 + C27;D27 = C21 - C27;D22 = C22 + C23;D23 = C22 - C23;D24 = C24 + C25; D28 = C28 + (106*C31 >> 8);D31 = C31 - (181*D28 >> 8);D28 = D28 + (106*D31 >> 8);
/stage 5
E5 = D5 + D7; E9 = D8 + (106*D9 >> 8); E8 = -(D9 - (90*E9 >> 8)); E11 = D11 + D12;E12 = D12 - (E11 >> 1); E15 = D14 + (106*D15 >> 8); E16 = D16 + C18;E18 = D16 - C18;E17 = C17 + D19;E19 = C17 - D19; E20 = D20 + (106*D21 >> 8);E21 = D21 - (90*E20 >> 8);E23 = D23 + D24;E24 = D24 - (E23 >> 1);E26 = D26 + (106*D27 >> 8); E28 = - D28 + C30;E30 = D28 + C30;E29 = - C29 + D31;E31 = C29 + D31;
/stage 6
F16 = E16 - (50*E17 >> 8); F18 = E18 - (171*E19 >> 8); F28 = E28 - (171*E29 >> 8);F29 = E29 + (118*F28 >> 8);F30 = E30 - (50*E31 >> 8);F31 = E31 + (48*F30 >> 8);
/stage 7 Y0 = D0;Y1 = E24;Y2 = E12;Y3 = -F16;Y4 = D4;Y5 = F31;Y6 = E8;Y7 = -E26;Y8 = D2;Y9 = E21;Y10 = E15; Y11 = F29;Y12 = E5;Y13 = -F18;Y14 = D13;Y15 = D22;Y16 = 0;Y17 = 0;Y18 = 0;Y19 = 0;Y20 = 0;Y21 = 0;Y22 = 0;Y23 = 0;Y24 = 0;Y25 = 0;Y26 = 0;Y27 = 0;Y28 = 0;Y29 = 0;Y30 = 0;Y31 = 0; }

For example, the frequency transformation unit 230 produces a 16x32 intermediate value matrix by repeating the above-described point transformation 32 times by applying each column of 64 columns of the 32x32 input block as the input values X0 through X31, and acquires a 16x16 transform matrix of a low frequency band by repeating the above-described point transformation 16 times by applying 16 rows constituting the 16x32 intermediate value matrix as the input values X0 through X31.

FIG. 7 is a flowchart illustrating an image transforming method according to an embodiment of the present invention.

Referring to FIG. 7, in operation 710, the frequency area selection unit 210 selects a predetermined frequency area for frequency transformation with respect to an MxN (where M and N are positive integers) input block. As described above, energy of a transformed block due to frequency transformation is accumulated into a low frequency band, the frequency area selection unit 210 may select a low frequency band.

In operation 720, the truncated transform matrix acquisition unit 220 acquires a truncated transform matrix by selecting elements for generation of transformation coefficients corresponding to the selected frequency band from among the elements of an MxN transform matrix for use in the frequency transformation with respect to the MxN input block. For example, to acquire an axd transformed block in the low frequency band, the truncated transform matrix acquisition unit 220 produces an axN truncated vertical transform matrix by selecting elements corresponding to a upper rows from an MxN vertical transform matrix, and produces an Mxd truncated horizontal transform matrix by selecting elements corresponding to d left columns from an MxN horizontal transform matrix.

In operation 730, the frequency transformation unit 230 produces transformation coefficients corresponding to the selected frequency band by performing frequency transformation by applying the truncated transform matrix to the MxN input block. According to the above-described embodiments of the present invention, since transformation coefficients corresponding to only a selected frequency band from an overall transformed block are produced in a transformation process, a significance map representing positions of effective transformation coefficients, namely, non-zero transformation coefficients, within a block is produced for only the selected frequency band. Although only a case where the selected low frequency band has a block shape has been illustrated, the shape of the selected low frequency band is not limited thereto, and various shapes of low frequency bands, such as a triangular low frequency band around a DCT coefficient, as shown in FIG. 12B, may be selected. Information regarding the selected low frequency band may be signaled using a predetermined syntax independently from a bitstream, or, when an encoding side and a decoding side previously set the only shape and the only range of a low frequency band of which transformation coefficients are to be produced, transformation and inverse-transformation may be performed on only the previously-set low frequency band without transmitting a special syntax.

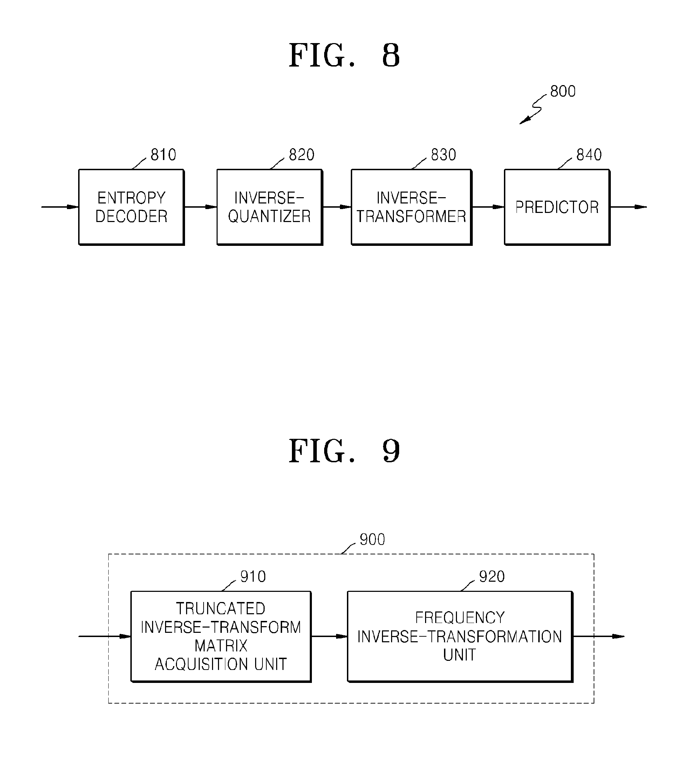

FIG. 8 is a block diagram of an image decoding apparatus 800 according to an embodiment of the present invention.

Referring to FIG. 8, the image decoding apparatus 800 includes an entropy decoder 810, an inverse-quantizer 820, an inverse-transformer 830, and a predictor 840.

The entropy encoder 810 extracts prediction mode information, reference picture information, and residual information of a current block to be decoded, from an input bitstream.

The inverse-quantizer 820 inverse-quantizes quantized transformation coefficients, which are entropy-decoded by the entropy decoder 810.

The inverse-transformer 830 inverse-transforms the inverse-quantized transformation coefficients. Accordingly, residual values for each block are restored. In particular, the inverse-transformer 830 performs inverse DCT according to additions and subtractions based on an integer and a shift operation, instead of a floating point operation, by substituting the elements of a transformation matrix used for existing inverse DCT with rational numbers, thereby reducing calculation complexity while increasing an operation speed. The inverse-transformer 830 may also perform inverse DCT by using an inverse transformation matrix including elements that are obtained by multiplying the elements of an inverse transformation matrix used for inverse DCT by a power of 2 and then rounding up the multiplied elements, thereby reducing overall calculation complexity. The inverse-transformer 830 also acquires a truncated inverse-transformation matrix by selecting elements for generation of inverse- transformation coefficients corresponding to a predetermined frequency area from among the elements of an MxN inverse-transformation matrix for use in frequency inverse-transformation with respect to an MxN input block, and performs inverse-transformation by using the truncated inverse-transformation matrix, thereby reducing the number of operations required by the inverse-transformation.

The predictor 840 produces a prediction value of the current block via inter prediction or intra prediction, and restores the current block by adding the generated prediction value to the residual values restored in the inverse-transformer 830.

FIG. 9 is a block diagram of an image inverse-transforming apparatus 900 according to an embodiment of the present invention. The image inverse-transforming apparatus 900 of FIG. 9 corresponds to the inverse-transformer 830 of FIG. 8.

Referring to FIG. 9, the image inverse-transforming apparatus 900 includes a truncated inverse-transform matrix acquisition unit 910 and a frequency inverse-transformation unit 920.

The truncated inverse-transform matrix acquisition unit 910 receives a transformed block of a predetermined frequency band and generates a truncated inverse-transform matrix for inverse-transformation with respect to the received transformed block. For example, a bitstream may include information regarding various low frequency band shapes such as a rectangular low frequency band block and a triangular low frequency band block, as shown in FIGS. 12A and 12B, and information regarding the sizes of a low frequency band, and the truncated inverse-transform matrix acquisition unit 910 may determine based on the information regarding the low frequency band shapes and the information regarding the sizes of a low frequency band what shape and what frequency band of transformation coefficients acquired in transformation correspond to from among the transformation coefficients included in an overall transformed block.

The truncated inverse-transform matrix acquisition unit 910 acquires a truncated inverse-transform matrix by selecting elements for inverse-transformation with respect to the transformation coefficients corresponding to a frequency band of the received transformed block from among the elements of an MxN inverse-transform matrix for use in frequency inverse-transformation with respect to an MxN (where M and N are positive integers) block. The MxN inverse-transform matrix corresponds to an inverse matrix of the MxN transform matrix and may be a substituted NxN inverse-transform matrix that is obtained by substituting the elements of an inverse-transform matrix with rational numbers or has elements obtained by multiplying the elements of the inverse-transform matrix by a power of 2 and rounding up the multiplied elements. When the substituted NxN transform matrix is used, IDCT (Inverse DCT) may be performed using only additions, subtractions, and a shift operation.

The frequency inverse-transformation unit 920 produces a residual block by inversely transforming the MxN transformed block by using the truncated inverse-transform matrix to the received transformed block of the predetermined frequency band.

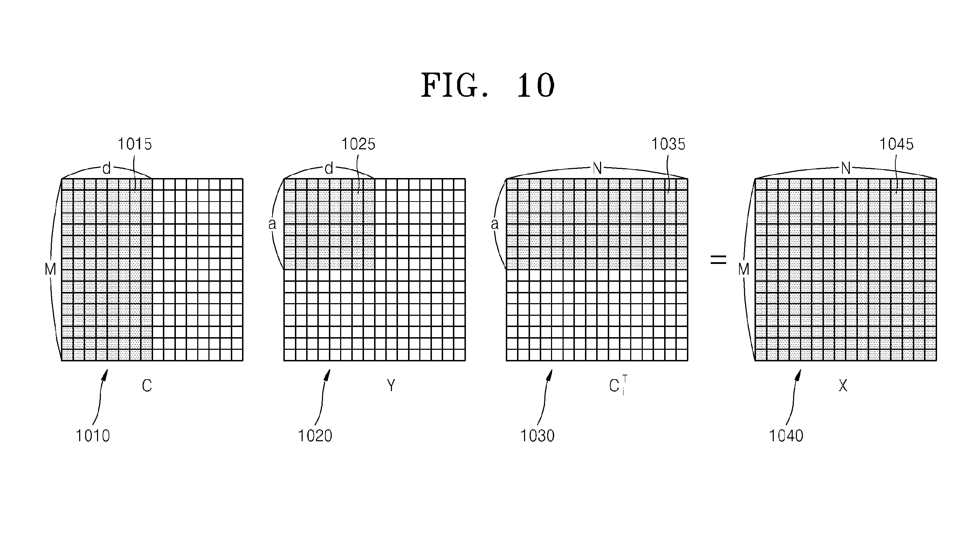

FIG. 10 is a reference diagram for illustrating a process in which the truncated inverse-transform matrix acquisition unit 910 acquires a truncated inverse-transform matrix according to the frequency band of the received transformed block, according to an embodiment of the present invention.

Referring to FIG. 10, it is assumed that an axd transformed block which is to be inversely transformed is Y 1025, an MxN vertical inverse-transform matrix is Ci 1010, and an MxN horizontal transform matrix is $Ci^T$ 1030. The axd transformed block Y 1025 includes only transformation coefficients corresponding to a low frequency band from among the transformation coefficients included in an MxN transformed block 1020, and may be inversely transformed by using the MxN vertical inverse-transform matrix Ci 1010 and the MxN horizontal inverse-transform matrix CiT 1030 without changes. Accordingly, the truncated inverse-transform matrix acquisition unit 910 restores an MxN residual block from the axd transformed block Y 1025 of the low frequency band via a matrix operation expressed by Equation; MCi * Y * MCiT, by using an Mxd truncated vertical inverse-transform matrix MCi 1015 and an axN truncated horizontal transform matrix $MCi^T$ 1035 obtained by respectively truncating the MxN vertical inverse-transform matrix Ci 1010 and the MxN horizontal inverse-transform matrix $Ci^T$ 1030. For example, the truncated inverse-transform matrix acquisition unit 910 produces the Nxd truncated vertical transform matrix MCi 1015 by selecting elements corresponding to d left columns from the MxN vertical transform matrix Ci 1010. The truncated inverse-transform matrix acquisition unit 910 produces the axN truncated horizontal transform matrix $MCi^T$ 1035 by selecting elements corresponding to a upper rows from the MxN horizontal transform matrix $Ci^T$ 1030. For example, as illustrated in FIG. 10, assuming M and N are 16 and a and d are 8, the truncated inverse-transform matrix acquisition unit 910 acquires a 16x8 truncated vertical inverse-transform matrix by selecting only 8 left columns from a 16x16 vertical inverse-transform matrix and an 8x16 truncated horizontal inverse-transform matrix by selecting only upper 8 rows from a 16x16 horizontal inverse-transform matrix, in order to restore a 16x16 residual block of a low frequency band via inverse transformation with respect to an 8x8 transformed block of a low frequency band. The frequency inverse-transformation unit 920 may produce a 16x16 residual block by performing inverse-transformation via matrix operations among the 16x8 truncated vertical inverse-transform matrix, the 8x16 truncated horizontal inverse-transform matrix, and the 8x8 transformed block. For example, a 16x8 intermediate value is produced by applying the 16x8 truncated vertical inverse-transform matrix to the 8x8 transformed block, and the 16x16 residual block is finally acquired by applying the 8x16 truncated horizontal inverse-transform matrix to the 16x8 intermediate value.

When M and N are 32, X0 through X15 denote input values, Ai, Bi, Ci, Di, Ei, Fi, and Gi (where i denotes an integer ranging from 0 to 31) denote intermediate values, and Y0 through Y31 denote output values, the frequency inverse-transformation unit 920 restores a 32x32 residual block by repeating the following point transformation with respect to the row-direction input values and the column-direction input values of the 16x16 transformed block of a low frequency band produced according to the flow graph 400 of FIG. 4: { /stage 0 G16 = (12 * X1 ) >>8;G17 = (-171 * X15) >> 8;G18 = ( 109 * X9) >> 8;G19=( - 86 * X7) >> 8;G20 = (62 * X5) >> 8;G21 =(-131 * X11) >> 8;G22= ( 152*X13) >> 8;G23 = ( -37 * X3) >> 8;G24 = (253 * X3) >> 8;G25 = (205 * X13) >> 8;G26 = (219 * X11) >> 8;G27 = ( 248 * X5) >> 8;G28 = ( 241 * X7 ) >> 8;G29 = ( 231 * X9) >> 8;G30 = ( 189 * X15 ) >> 8;G31 = (255 * X1) >> 8;

/Stage 1 F8 = ( 25 * X2 ) >> 8;F9 = ( - 162 * X14)>> 8;F10= ( 120 * X10 ) >>8;F11 = ( -74 * X6) >> 8;F12 = (244 * X6) >> 8;F13 = (225 * X10) >> 8;F14 = ( 197 * X14) >> 8;F15 = (254 * X2) >> 8; F16 = G16 + G17;F17 = G16 - G17;F18 = G19 - G18;F19 = G19 + G18;F20 = G20 + G21 ;F21 = G20 - G21;F22 = G23 - G22;F23 = G23 + G22;F24 = G24 + G25; F25 = G24 - G25;F26 = G27 - G26;F27 = G27 + G26;F28 = G28 + G29;F29 = G28 - G29;F30 = G31 - G30;F31 = G31 + G30;

/stage 2

E4 = ( 49 * X4 ) >> 8;E5= ( - 142 * X12 ) >> 8;E6 = ( 212 * X12 ) >>8;E7 = (251 * X4) » 8;

E8 = F8 + F9;E9 = F8 - F9;E10 = F11 - F10;E11 = F11 + F10;E12 = F12 + F13;E13 = F12 - F13;E14 = F15 - F14;E15 = F15 + F14;E17 = ( 49 * F30 - 251 * F17 ) >> 8;E18 = ( - 251*F29 - 49*F18 ) >> 8;E21 = ( 212 * F26 - 142 * F21) >> 8; E22 = ( - 142*F25 - 212*F22 ) >> 8;E25 = ( 212 * F25 - 142 * F22 ) >> 8;E26 = ( 142 * F26 + 212 * F21 ) >> 8;E29 = ( 49 * F29 - 251 * F18) >> 8;E30 = ( 251 * F30 + 49 * F17) >> 8;

/stage 3

D0 = (181 * ( X0 )) >> 8;D1 = ( 181 * ( X0 ))>> 8;D2 = ( 97 * X8 ) >> 8;D3 = ( 236 * X8 ) » 8;

D4 = E4 + E5;D5 = E4 - E5;D6 = E7 - E6;D7 = E7 + E6;D9 = ( 97*E14 - 236*E9 ) >> 8;D10 = (-236*E13 - 97*E10) >> 8; D13= (97 * E13 - 236 * E10) >> 8;D14 = (236 * E14 + 97 * E9) >> 8;D16 = F16 + F19;D19 = F16 - F19;D20 = F23 - F20; D23 = F23 + F20;D24 = F24 + F27;D27 = F24 - F27;D28 = F31 - F28;D31 = F31 + F28;D17 = E17 + E18;D18 = E17 - E18;D21 = E22 - E21 ;D22 = E22 + E21 ;D25 = E25 + E26;D26 = E25 - E26;D29 = E30 - E29;D30 = E30 + E29;

/stage 4

C0 = D0 + D3;C3 = D0 - D3;C8 = E8 + E11;C11 = E8 - E11;C12 = E15 - E12;C15 = E15 + E12;C1 = D1 + D2;C2 = D1 - D2;C9 = D9 + D10;C10 = D9 - D10;C13 = D14 - D13;C14 = D14 + D13;C5 = 181 * ( D6 - D5 )) >> 8;C6 = ( 181 * (D6+D5)) >> 8;C18 = ( 97*D29 - 236*D18 ) >> 8;C20 = ( - 236*D27 - 97*D20 ) >> 8;C26 = ( - 236*D21 + 97*D26) » 8; C28 = ( 97*D19 + 236*D28 ) >> 8;C19 = ( 97*D28 - 236*D19 ) >> 8;C21 = (- 236*D26 - 97*D21 ) >> 8;C27 = (- 236*D20 + 97*D27) >> 8;C29 = ( 97*D18 + 236*D29) >> 8;

/stage 5

B0 = C0 + D7;B7 = C0 - D7;B1 = C1 + C6;B6 = C1 - C6;B2 = C2 + C5;B5 = C2 - C5;B3 = C3 + D4;B4 = C3 - D4;B10 = ( 181 * ( C13 - C10 )) >> 8;B13= ( 181 * ( C13 + C10 )) >> 8;B11 = ( 181 * ( C12 - C11 )) >> 8;B12 = ( 181 * ( C12 + C11 )) >> 8;B16 = D16 + D23;B23 = D16 - D23;B24 = D31 - D24;B31 = D31 + D24;B17 = D17 + D22;B22 = D17 - D22; B25 = D30 - D25;B30 = D30 + D25;B18 = C18 + C21;B21 = C18 - C21;B26 = C29 - C26;B29 = C29 + C26;B19 = C19 + C20;B20 = C19 - C20;B27 = C28 - C27;B28 = C28 + C27;

/stage 6 A0 = B0 + C15;A15 = B0 - C15;A1 = B1 + C14;A14 = B1 - C14;A2 = B2 + B13;A13 = B2 - B13;A3 = B3 + B12; A12 = B3 - B12;A4 = B4 + B11;A11 = B4 - B11;A5 = B5 + B10;A10 = B5 - B10;A6 = B6 + C9;A9 = B6 - C9;A7 = B7 + C8;A8 = B7 - C8;A20 = ( 181 * ( B27 - B20 )) >> 8;A27 = ( 181 * ( B27 + B20 )) >> 8;A21 = ( 181 * ( B26 - B21 )) >> 8; A26 = ( 181 * ( B26 + B21 )) >> 8;A22 = ( 181 * ( B25 - B22 )) >> 8;A25 = ( 181 * ( B25 + B22 )) >> 8;A23 = ( 181 * ( B24 - B23 )) >> 8;A24 = ( 181 * ( B24 + B23 )) >> 8;

/stage 7

Y0 = A0 + B31 ;Y31 = A0 - B31;Y1 = A1 + B30;Y30 = A1 - B30;Y2 = A2 + B29;Y29 = A2 - B29;Y3 = A3 + B28;Y28 = A3 - B28;Y4 = A4 + A27;Y27 = A4 - A27;Y5 = A5 + A26;Y26 = A5 - A26;Y6 = A6 + A25;Y25 = A6 - A25;Y7 = A7 + A24; Y24 = A7 - A24;Y8 = A8 + A23;Y23 = A8 - A23;Y9 = A9 + A22;Y22 = A9 - A22;Y10 = A10 + A21;Y21 = A10 - A21;Y11 = A11 + A20;Y20 = A11 - A20;Y12 = A12 + B19;Y19 = A12 - B19;Y13 = A13 + B18;Y18 = A13 - B18;Y14 = A14 + B17; Y17 = A14 - B17;Y15 = A15 + B16;Y16 = A15 - B16; }

When M and N are 64, X0 through X15 denote input values, Zi, Ai, Bi, Ci, Di, Ei, Fi, Gi, and Hi (where i denotes an integer ranging from 0 to 63) denote intermediate values, and Y0 through Y63 denote output values, the frequency inverse-transformation unit 920 restores a 64x64 residual block by repeating the following point transformation with respect to the row-direction input values and the column-direction input values of the 16x16 transformed block of a low frequency band produced according to the flow graph 400 of FIG. 4: { /stage 0 H32 = (25*X1) » 10;H33 = 0;H34 = 0; H35 = (-369*X15) >> 10;H36 = (224*X9) >> 10;H37 = 0;H38 = 0;H39 = (-175*X7) >> 10;H40 = (125*X5) >> 10;H41 = 0;H42 = 0;H43 = (-273*X11) >> 10;H44 = (321*X13) >> 10;H45 = 0;H46 = 0;H47 = (-75*X3) >> 10;H48 = (1021*X3) >> 10;H49 = 0;H50 = 0;H51 = (972*X13) >> 10;H52 = (987*X11) >> 10;H53 = 0;H54 = 0;H55 = (1016*X5) >> 10;H56 = (1009*X7) >> 10;H57 = 0;H58 = 0;H59 = (999*X9) >> 10;H60 = (955*X15) >> 10;H61 = 0;H62 = 0;H63 = (1024*X1) >> 10;
/stage 1
G16 = (50*X2) >> 10;G17 = 0;G18 = 0;G19 = (-345*X14) >> 10;G20 = (249*X10) >> 10;G21 = 0;G22 = 0;G23 = (-150*X6) >> 10;G24 = (1013*X6) >> 10;G25 = 0;G26 = 0;G27 = (993*X10) >> 10;G28 = (964*X14) >> 10;G29 = 0;G30 = 0;G31 = (1023*X2) >> 10;
G32 = H32+H33;G33 = H32-H33;G34 = H35-H34;G35 = H35+H34;G36 = H36+H37;G37 = H36-H37;G38 = H39-H38; G39 = H39+H38;G40 = H40+H41;G41 = H40-H41;G42 = H43-H42;G43 = H43+H42;G44 = H44+H45;G45 = H44-H45; G46 = H47-H46;G47 = H47+H46;G48 = H48+H49;G49 = H48-H49;G50 = H51-H50;G51 = H51+H50;G52 = H52+H53; G53 = H52-H53;G54 = H55-H54;G55 = H55+H54;G56 = H56+H57;G57 = H56-H57;G58 = H59-H58;G59 = H59+H58; G60 = H60+H61;G61 = H60-H61;G62 = H63-H62;G63 = H63+H62;
/stage 2
F8 = (100*X4) >> 10;F9 = 0;F10 = 0;F11 = (-297*X12) >> 10;F12 = (980*X12) >> 10;F13 = 0;F14 = 0;F15 = (1019*X4) >> 10; F16 = G16+G17;F17 = G16-G17;F18 = G19-G18;F19 = G19+G18;F20 = G20+G21;F21 = G20-G21;F22 = G23-G22; F23 = G23+G22;F24 = G24+G25;F25 = G24-G25;F26 = G27-G26;F27 = G27+G26;F28 = G28+G29;F29 = G28-G29; F30 = G31-G30;F31 = G31+G30;F33 = (100*G62-1019*G33) >> 10;F34 = (-1019*G61-100*G34) >> 10;F37 = (792*G58-650*G37) >> 10;F38 = (-650*G57-792*G38) » 10;F41 = (483*G54-903*G41) >> 10;F42 = (-903*G53-483*G42) >> 10;F45 = (980*G50-297*G45) >> 10;F46 = (-297*G49-980*G46) >> 10;F49 = (980*G49-297*G46) » 10;F50 = (297*G50+980*G45) >> 10;F53 = (483*G53-903*G42) >> 10;F54 = (903*G54+483*G41) >> 10;F57 = (792*G57-650*G38) >> 10;F58 = (650*G58+792*G37) » 10;F61 = (100*G61-1019*G34) >> 10;F62 = (1019*G62+100*G33) >> 10;
/stage 3
E4 = (200*X8) >> 10;E5 = 0;E6 = 0;E7 = (1004*X8) >> 10;
E8 = F8+F9;E9 = F8-F9;E10 = F11-F10;E11 = F11+F10;E12 = F12+F13;E13 = F12-F13;E14 = F15-F14;E15 = F15+F14; E17 = (200*F30-1004*F17) >> 10;E18 = (-1004*F29-200*F18) >> 10;E21 = (851*F26-569*F21) >> 10;E22 = (-569*F25-851*F22) » 10;E25 = (851*F25-569*F22) >> 10;E26 = (569*F26+851*F21) >> 10;E29 = (200*F29-1004*F18) >> 10;E30 = (1004*F30+200*F17) >> 10;E32 = G32+G35;E33 = F33+F34;E34 = F33-F34;E35 = G32-G35;E36 = G39-G36;E37 = F38-F37;E38 = F38+F37;E39 = G39+G36;E40 = G40+G43;E41 = F41+F42;E42 = F41-F42;E43 = G40-G43; E44 = G47-G44;E45 = F46-F45;E46 = F46+F45;E47 = G47+G44;E48 = G48+G51;E49 = F49+F50;E50 = F49-F50;E51 = G48-G51;E52 = G55-G52;E53 = F54-F53;E54 = F54+F53;E55 = G55+G52;E56 = G56+G59;E57 = F57+F58;E58 = F57-F58;E59 = G56-G59;E60 = G63-G60;E61 - F62-F61;E62 = F62+F61;E63 = G63+G60;
/stage 4
D0 = (724*(X0)) >> 10;D1 = (724*(X0)) >> 10;D2 = 0;D3 = 0;
D4 = E4+E5;D5 = E4-E5;D6 = E7-E6;D7 = E7+E6;D9 = (392*E14-946*E9) >> 10;D10 = (-946*E13-392*E10) >> 10; D13 = (392*E13-946*E10) >> 10;D14 = (946*E14+392*E9) » 10;D16 = F16+F19;D19 = F16-F19;D20 = F23-F20;D23 = F23+F20;D24 = F24+F27;D27 = F24-F27;D28 = F31-F28;D31 = F31+F28;D17 = E17+E18;D18 = E17-E18;D21 = E22-E21;D22 = E22+E21;D25 = E25+E26;D26 = E25-E26;D29 = E30-E29;D30 = E30+E29;D34 = (200*E61-1004*E34) >> 10;D35 = (200*E60-1004*E35) » 10;D36 = (-1004*E59-200*E36) >> 10;D37 = (-1004*E58-200*E37) >> 10;D42 = (851*E53-569*E42) >> 10;D43 = (851*E52-569*E43) >> 10;D44 = (-569*E51-851*E44) » 10;D45 = (-569*E50-851*E45) >> 10;D50 = (851*E50-569*E45) >> 10;D51 = (851*E51-569*E44) >> 10;D52 = (569*E52+851*E43) >> 10;D53 = (569*E53+851*E42) » 10;D58 = (200*E58-1004*E37) >> 10;D59 = (200*E59-1004*E36) >> 10;D60 = (1004*E60+200*E35) >> 10;D61 = (1004*E61+200*E34) >> 10;
/stage 5 C0 = D0+D3;C3 = D0-D3;C8 = E8+E11;C11 = E8-E11;C12 = E15-E12;C15 = E15+E12;C1 = D1+D2;C2 = D1-D2;C9 = D9+D10;C10 = D9-D10;C13 = D14-D13;C14 = D14+D13;C5 = (724*(D6-D5)) >> 10;C6 = (724*(D6+D5)) >> 10;C18 = (392*D29-946*D18) >> 10;C20 = (-946*D27-392*D20) >> 10;C26 = (-946*D21+392*D26) » 10;C28 = (392*D19+946*D28) >> 10;C19 = (392*D28-946*D19) >> 10;C21 = (-946*D26-392*D21 ) >> 10;C27 = (-946*D20+392*D27) >> 10;C29 = (392*D18+946*D29) » 10;C32 = E32+E39;C39 = E32-E39;C40 = E47-E40;C47 = E47+E40;C48 = E48+E55;C55 = E48-E55;C56 = E63-E56;C63 = E63+E56;C33 = E33+E38;C38 = E33-E38;C41 = E46-E41;C46 = E46+E41;C49 = E49+E54;C54 = E49-E54;C57 = E62-E57;C62 = E62+E57;C34 = D34+D37;C37 = D34-D37;C42 = D45-D42;C45 = D45+D42;C50 = D50+D53;C53 = D50-D53;C58 = D61-D58;C61 = D61+D58;C35 = D35+D36; C36 = D35-D36;C43 = D44-D43;C44 = D44+D43;C51 = D51+D52;C52 = D51-D52;C59 = D60-D59;C60 = D60+D59;
/stage 6 B0 = C0+D7;87 = C0-D7;B1 = C1+C6;B6 = C1-C6;B2 = C2+C5;B5 = C2-C5;B3 = C3+D4;B4 = C3-D4;B10 = (724*(C13-C10)) >> 10;B13 = (724*(C13+C10)) >> 10;B11 = (724*(C12-C11)) >> 10;B12 = (724*(C12+C11)) >> 10;

B16 = D16+D23;B23 = D16-D23;B24 = D31-D24;B31 = D31+D24;B17 = D17+D22;B22 = D17-D22;B25 = D30-D25;B30 = D30+D25;B18 = C18+C21;B21 = C18-C21;B26 = C29-C26;B29 = C29+C26;B19 = C19+C20;B20 = C19-C20;B27 = C28-C27;B28 = C28+C27;B36 = (392*C59-946*C36) >> 10;B40 = (-946*C55-392*C40) >> 10;B52 = (-946*C43+392*C52) » 10;B56 = (392*C39+946*C56) >> 10;B37 = (392*C58-946*C37) >> 10;B41 = (-946*C54-392*C41) >> 10;B53 = (-946*C42+392*C53) >> 10;B57 = (392*C38+946*C57) » 10;B38 = (392*C57-946*C38) >> 10;B42 = (-946*C53-392*C42) >> 10;B54 = (-946*C41+392*C54) >> 10;B58 = (392*C37+946*C58) >> 10;B39 = (392*C56-946*C39) » 10;B43 = (-946*C52-392*C43) >> 10;B55 = (-946*C40+392*C55) >> 10;B59 = (392*C36+946*C59) >> 10;

/stage 7 A0 = B0+C15;A15 = BO-C15;A1 = B1+C14;A14 = B1-C14;A2 = B2+B13;A13 = B2-B13;A3 = B3+B12;A12 = B3-B12;A4 = B4+B11;A11 = B4-B11;A5 = B5+B10;A10 = B5-B10;A6 = B6+C9;A9 = B6-C9;A7 = B7+C8;A8 = B7-C8; A20 = (724*(B27-B20)) >> 10;A27 = (724*(B27+B20)) >> 10;A21 = (724*(B26-B21)) >> 10;A26 = (724*(B26+B21)) » 10;A22 = (724*(B25-B22)) >> 10;A25 = (724*(B25+B22)) >> 10;A23 = (724*(B24-B23)) » 10;A24 - (724*(B24+B23)) >> 10;A32 = C32+C47;A47 = C32-C47;A48 = C63-C48;A63 = C63+C48;A33 = C33+C46;A46 = C33-C46;A49 = C62-C49; A62 = C62+C49;A34 = C34+C45;A45 = C34-C45;A50 = C61-C50;A61 = C61+C50;A35 = C35+C44;A44 = C35-C44; A51 = C60-C51;A60 = C60+C51;A36 = B36+B43;A43 = B36-B43;A52 = B59-B52;A59 = B59+B52;A37 = B37+B42;A42 = B37-B42;A53 = B58-B53;A58 = B58+B53;A38 = B38+B41;A41 = B38-B41;A54 = B57-B54;A57 = B57+B54;A39 = B39+B40;A40 = B39-B40;A55 = B56-B55;A56 = B56+B55;

/stage 8
Z0 = A0+B31;Z31 = A0-B31;Z1 = A1+B30;Z30 = A1-B30;Z2 = A2+B29;Z29 = A2-B29;Z3 = A3+B28;Z28 = A3-B28;Z4 = A4+A27;Z27 = A4-A27;Z5 = A5+A26;Z26 = A5-A26;Z6 = A6+A25;Z25 = A6-A25;Z7 = A7+A24;Z24 = A7-A24;Z8 = A8+A23;Z23 = A8-A23;Z9 = A9+A22;Z22 = A9-A22;Z10 = A10+A21;Z21 = A10-A21;Z11 = A11+A20;Z20 = A11-A20; Z12 = A12+B19;Z19 = A12-B19;Z13 = A13+B18;Z18 = A13-B18;Z14 = A14+B17;Z17 = A14-B17;Z15 = A15+B16;Z16 = A15-B16;Z40 = (724*(A55-A40)) >> 10;Z55 = (724*(A55+A40)) >> 10;Z41 = (724*(A54-A41)) >> 10;Z54 = (724* (A54+A41)) » 10;Z42 = (724*(A53-A42)) >> 10;Z53 = (724*(A53+A42)) >> 10;Z43 = (724*(A52-A43)) » 10;Z52 = (724* (A52+A43)) >> 10;Z44 = (724*(A51-A44)) >> 10;Z51 = (724*(A51+A44)) >> 10;Z45 = (724*(A50-A45)) >> 10;Z50 = (724*(A50+A45)) >> 10;Z46 = (724*(A49-A46)) >> 10;Z49 = (724*(A49+A46)) >> 10;Z47 = (724*(A48-A47)) >> 10;Z48 = (724*(A48+A47)) >> 10;

/stage 9
Y0 = Z0+A63;Y63 = Z0-A63;Y1 = Z1+A62;Y62 = Z1-A62;Y2 = Z2+A61;Y61 = Z2-A61;Y3 = Z3+A60;Y60 = Z3-A60;Y4 = Z4+A59;Y59 = Z4-A59;Y5 = Z5+A58;Y58 = Z5-A58;Y6 = Z6+A57;Y57 = Z6-A57;Y7 = Z7+A56;Y56 = Z7-A56;Y8 = Z8+Z55;Y55 = Z8-Z55;Y9 = Z9+Z54;Y54 = Z9-Z54;Y10 = Z10+Z53;Y53 = Z10-Z53;Y11 = Z11+Z52;Y52 = Z11-Z52;Y12 = Z12+Z51;Y51 = Z12-Z51;Y13 = Z13+Z50;Y50 = Z13-Z50;Y14 = Z14+Z49;Y49 = Z14-Z49;Y15 = Z15+Z48;Y48 = Z15-Z48;Y16 = Z16+Z47;Y47 = Z16-Z47;Y17 = Z17+Z46;Y46 = Z17-Z46;Y18 = Z18+Z45;Y45 = Z18-Z45;Y19 = Z19+Z44;Y44 = Z19-Z44;Y20 = Z20+Z43;Y43 = Z20-Z43;Y21 = Z21+Z42;Y42 = Z21-Z42;Y22 = Z22+Z41;Y41 = Z22-Z41;Y23 = Z23+Z40;Y40 = Z23-Z40;Y24 = Z24+A39;Y39 = Z24-A39;Y25 = Z25+A38;Y38 = Z25-A38;Y26 = Z26+A37;Y37 = Z26-A37;Y27 = Z27+A36;Y36 = Z27-A36;Y28 = Z28+A35;Y35 = Z28-A35;Y29 = Z29+A34;Y34 = Z29-A34;Y30 = Z30+A33;Y33 = Z30-A33;Y31 = Z31+A32;Y32 = Z31-A32; }

When M and N are 32, X0 through X15 denote input values, Zi, Ai, Bi, Ci, Di, Ei, and Fi (where i denotes an integer ranging from 0 to 31) denote intermediate values, and Y0 through Y31 denote output values, the frequency inverse-transformation unit 920 restores a 32x32 residual block by repeating the following point transformation with respect to the row-direction input values and the column-direction input values of the 16x16 transformed block of a low frequency band produced according to the flow graph 500 of FIG. 5: { /stage 0 D0= X0;E24 = X1;E12 = X2;F16 = -X3; D4 = X4; F31 = X5; E8 = X6; E26 = -X7;D2 = X8; E21 = X9; E15=X10; F29 = X11;E5 = X12; F18 = -X13; D13=X14; D22 = X15;

/stage 1
E16 = (251*F16 ) >> 8;E17 = (-49*F16 ) >> 8;E18 = (212*F18 ) >> 8;E19 = (-142*F18 ) >> 8;E28 = (142*F29) >> 8;E29 = (212*F29) >> 8;E30 = (49*F31) >> 8;E31 = (251*F31) » 8;

/stage 2
D5 = (181*(E5 )) >> 8;D7 = (181*(E5 )) >> 8;D8 = (97*E8 ) >> 8;D9 = (-236*E8 )>> 8;D11 = (181*(- E12)) >> 8;D12 = (181*( E12)) >> 8;D14 = (236*E15) >> 8;D15 = (97*E15) » 8;D16 = E16 + E18;C18 = E16 - E18;C17 = E17 + E19;D19 = E17 - E19;D20 = ( - 97*E21) >> 8;D21 = ( 236*E21) >> 8;D23 = (181*(- E24)) >> 8;D24 = (181*( E24)) >> 8;D26 = (236*E26) >> 8;D27 = (97*E26 ) >> 8;D28 = - E28 + E30;C30 = E28 + E30;C29 = - E29 + E31;D31 = E29 + E31;

/stage 3
C0 = (181*D0 ) >> 8;C1 = (181*D0 ) >> 8;C2 = (97*D2 ) >> 8;C3 = (236*D2 ) >> 8;C4 = D4 + D5;C5 = D4 - D5;C6 = D7; C7 = D7; C8 = D8 + D14;C14 = D8 - D14;C9 = D9 + D15;C15 = D9 - D15;C10 = D11; C11 =- D11;C12 = D12 + D13;C13 = D12 - D13; C16 = (181*(D16 - D19)) >> 8;C19 = (181*(D16 + D19)) >> 8;C20 = D20 + D26;C26 = D20 - D26;C21 = D21 + D27;C27 = D21 - D27;C22 = D22 + D23;C23 = D22 - D23;C24 = D24;C25 = D24;C28 = (181*(D28 - D31)) >> 8;C31 = (181*(D28 + D31)) >> 8;

/stage 4

B0 = C0 + C3;B3 = C0 - C3;B1 = C1 + C2;B2 = C1 - C2;B4 = (49*C4 - 251*C7) >> 8;B7 = (251*C4 + 49*C7) >> 8;B5 = (142*C5 - 212*C6) >> 8;B6 = (212*C5 + 142*C6) >> 8;B8 = C8 + C11;B11 = C8 - C11;B9 = C9 + C10;B10 = C9 - C10; B12 = C12 + C15;B15 = C12 - C15;B13 = C13 + C14;B14 = C13 - C14;B16 = C16 + C28;B28 = C16 - C28;B17 = C17 + C29;B29 = C17 - C29;B18 = C18 + C30;B30 = C18 - C30;B19 = C19 + C31;B31 = C19 - C31;B20 = C20 + C23;B23 = C20 - C23;B21 = C21 + C22;B22 = C21 - C22;B24 = C24 + C27;B27 = C24 - C27;B25 = C25 + C26;B26 = C25 - C26;

/stage 5

A0 = B0 + B7;A7 = B0 - B7;A1 = B1 + B6;A6 = B1 - B6;A2 = B2 + B5;A5 = B2 - B5;A3 = B3 + B4;A4 = B3 - B4;A8 = (197*B8 - 162*B15) >> 8;A15 = (162*B8 + 197*B15) >> 8;A9 = (120*B9 + 225*B14) >> 8;A14 = (-225*B9 + 120*B14) >> 8;A10 = (244*B10 - 74*B13) >> 8;A13 = (74*B10 + 244*B13) >> 8;A11 = (25*B11 + 254*B12) >> 8;A12 = (-254*B11 + 25*B12) >> 8;A16 = B16 + B23;A23 = B16 - B23;A17 = B17 + B22;A22 = B17 - B22;A18 = B18 + B21;A21 = B18 - B21;A19 = B19 + B20;A20 = B19 - B20;A24 = B24 + B31;A31 = B24 - B31;A25 = B25 + B30;A30 = B25 - B30;A26 = B26 + B29;A29 = B26 - B29;A27 = B27 + B28;A28 = B27 - B28;

/stage 6 Z0 = A0 + A15;Z1 = A1 + A14;Z2 = A2 + A13;Z3 = A3 + A12;Z4 = A4 + A11;Z5 = A5 + A10;Z6 = A6 + A9;Z7 = A7 + A8;Z8 = A7 - A8;Z9 = A6 - A9;Z10 = A5 - A10;Z11 = A4 - A11;Z12 = A3 - A12;Z13 = A2 - A13;Z14 = A1 - A14;Z15 = A0 - A15;Z16 = (171*A16 + 189*A31) >> 8;Z31 = (-189*A16 + 171*A31) >> 8;Z17 = (205*A17 - 152*A30) >> 8;Z30 = (152*A17 + 205*A30) >> 8;Z18 = (131*A18 + 219*A29) >> 8;Z29 = (-219*A18 + 131*A29) >> 8;Z19 = (231*A19 - 109*A28) >> 8;Z28 = (109*A19 + 231*A28) >> 8;Z20 = (86*A20 + 241*A27) >> 8;Z27 = (-241*A20 + 86*A27) >> 8;Z21 = (248*A21 - 62*A26) >> 8;Z26 = (62*A21 + 248*A26) >> 8;Z22 = (37*A22 + 253*A25) >> 8;Z25 = (-253*A22 + 37*A25) >> 8;Z23 = (255*A23 - 12*A24) >> 8;Z24 = (12*A23 + 255*A24) >> 8

/stage 7

Y0 = Z0 + Z31;Y31 = Z0 - Z31;Y1 = Z1 + Z30;Y30 = Z1 - Z30;Y2 = Z2 + Z29;Y29 = Z2 - Z29;Y3 = Z3 + Z28;Y28 = Z3 - Z28;Y4 = Z4 + Z27;Y27 = Z4 - Z27;Y5 = Z5 + Z26;Y26 = Z5 - Z26;Y6 = Z6 + Z25;Y25 = Z6 - Z25;Y7 = Z7 + Z24;Y24 = Z7 - Z24;Y8 = Z8 + Z23;Y23 = Z8 - Z23;Y9 = Z9 + Z22;Y22 = Z9 - Z22;Y10 = Z10 + Z21;Y21 = Z10 - Z21;Y11 = Z11 + Z20;Y20 = Z11 - Z20;Y12 = Z12 + Z19;Y19 = Z12 - Z19;Y13 = Z13 + Z18;Y18 = Z13 - Z18;Y14 = Z14 + Z17;Y17 = Z14 - Z17;Y15 = Z15 + Z16;Y16 = Z15 - Z16; }

When M and N are 32, X0 through X15 denote input values, Zi, Ai, Bi, Ci, Di, Ei, and Fi (where i denotes an integer ranging from 0 to 31) denote intermediate values, and Y0 through Y31 denote output values, the frequency inverse-transformation unit 920 restores a 32x32 residual block by repeating the following point transformation with respect to the row-direction input values and the column-direction input values of the 16x16 transformed block of a low frequency band produced according to the flow graph 500 of FIG. 5: { /stage 0

D0= X0;E24 = X1;E12 = X2;F16 =-X3;D4 = X4; F31 = X5; E8 = X6; E26 = -X7;D2 = X8; E21 = X9; E15 = X10; F29 = X11;E5 = X12; F18 =-X13; D13=X14; D22 = X15;

/stage 1 E17 = - (48*F16>> 8);E16 = F16 + (50*E17>> 8);E19 = - (118*F18 >> 8);E18 = F18 + (171*E19>> 8); E29 = F29 ;E28 = (171*E29>> 8);E31 = F31 ;E30 = (50*E31>> 8);

/stage 2

D7 = (E5 >> 1);D5= E5 - D7;

D9 = -E8 ;D8 = - (106*D9>> 8);

D12 = E12 ;D11 = - D12;

D15 = (90*E15>> 8);D14 = E15 - (106*D15>> 8);

D16 = E16 + E18;C18 = E16 - E18;C17 = E17 + E19;D19 = E17 - E19;

D21 = E21 ;D20 = - (106*D21>> 8);D24 = E24 ;D23 = - D24;D27 = (90*E26>> 8);D26 = E26 - (106*D27>> 8);D28 = - E28 + E30;C30 = E28 + E30;C29 = - E29 + E31 ;D31 = E29 + E31;

/stage 3

C1 = D0 >> 1;C0 = D0 - C1;

C3 = D2 ;C2 = (106*C3>> 8);

C4 = D4 + D5;C5 = D4 - D5;C6 = D7; C7 = D7;

C8 = D8 + D14;C14 = D8 - D14;C9 = D9 + D15;C15 = D9 - D15;C10 = D11; C11 = - D11;C12 = D12 + D13;C13 = D12 - D13; D16 = D16 - (106*D19>> 8);C19 = D19 + (181*D16>> 8);C16 = D16 - (106*C19>> 8);C20 = D20 + D26;C26 = D20 - D26;C21 = D21 + D27;C27 = D21 - D27;C22 = D22 + D23;C23 = D22 - D23;C24 = D24;C25 = D24;D28 = D28 - (106*D31>> 8);C31 = D31 + (181*D28>> 8);C28 = D28 - (106*C31>> 8);

/stage 4 B0 = C0 + C3;B3 = C0 - C3;B1 = C1 + C2;B2 = C1 - C2; C4 = C4 - (210*C7>> 8);B7 = C7 + (251*C4>> 8);B4 = C4 - (210*B7>> 8);C5 = C5 - (136*C6>> 8);B6 = C6 + (212*C5>> 8);B5 = C5 - (136*B6>> 8); B8 = C8+C11;B11 = C8 - C11;B9 = C9 + C10;B10 = C9 - C10; B12 = C12 + C15;B15 = C12 - C15;B13 = C13 + C14;B14 = C13 - C14; B16 = C16 + C28;B28 = C16 - C28;B17 = C17 + C29;B29 = C17 - C29;B18 = C18 + C30;B30 = C18 - C30;B19 = C19 + C31; B31 = C19 - C31; B20 = C20 + C23;B23 = C20 - C23;B21 = C21 + C22;B22 = C21 - C22; B24 = C24 + C27;B27 = C24 - C27;B25 = C25 + C26;B26 = C25 - C26;

/stage 5

A0 = B0 + B7;A7 = B0 - B7;A1 = B1 + B6;A6 = B1 - B6;A2 = B2 + B5;A5 = B2 - B5;A3 = B3 + B4;A4 = B3 - B4;
B8 = B8 - (91*B15>> 8);A15 = B15 + (162*B8>> 8);A8 = B8 - (91*A15>> 8);B9 = B9 + (153*B14>> 8);A14 = B14 - (225*B9>> 8);A9 = B9 + (153*A14>> 8);B10 = B10 - (37*B13>> 8);A13 = B13 + (74*B10>> 8);A10 = B10 - (37*A13>> 8);B11 = B11 + (232*B12>> 8);A12 = B12 - (254*B11>> 8);A11 = B11 + (232*A12>> 8);A16 = B16 + B23;A23 = B16 - B23;A17 = B17 + B22;A22 = B17 - B22;A18 = B18 + B21;A21 = B18 - B21;A19 = B19 + B20;A20 = B19 - B20;
A24 = B24 + B31;A31 = B24 - B31;A25 = B25 + B30;A30 = B25 - B30;A26 = B26 + B29;A29 = B26 - B29;A27 = B27 + B28;A28 = B27 - B28;

/stage 6

Z0 = A0 + A15;Z1 = A1 + A14;Z2 = A2 + A13;Z3 = A3 + A12;Z4 = A4 + A11;Z5 = A5 + A10;Z6 = A6 + A9;Z7 = A7 + A8;
Z8 = A7 - A8;Z9 = A6 - A9;Z10 = A5 - A10;Z11 = A4 - A11;Z12 = A3 - A12;Z13 = A2 - A13;Z14 = A1 - A14;Z15 = A0 - A15; A16 = A16 + (113*A31>> 8);Z31 = A31 - (189*A16>> 8);Z16 = A16 + (113*Z31>> 8);A17 = A17 - (84*A30>> 8);
Z30 = A30 + (152*A17>> 8);Z17 = A17 - (84*Z30>> 8);A18 = A18 + (145*A29>> 8);Z29 = A29 - (219*A18>> 8);Z18 = A18 + (145*Z29>> 8);A19 = A19 - (57*A28>> 8);Z28 = A28 + (109*A19>> 8);Z19 = A19 - (57*Z28>> 8);A20 = A20 + (180*A27>> 8);Z27 = A27 - (241*A20>> 8);Z20 = A20 + (180*Z27>> 8);A21 = A21 - (31*A26>> 8);Z26 = A26 + (62*A21>> 8);Z21 = A21 - (31*Z26>> 8);A22 = A22 + (220*A25>> 8);Z25 = A25 - (253*A22>> 8);Z22 = A22 + (220*Z25>> 8);A23 = A23 - (6*A24>> 8);Z24 = A24 + (12*A23>> 8);Z23 = A23 - (6*Z24>> 8);

/stage 7

Y0 = Z0 + Z31;Y31 = Z0 - Z31;Y1 = Z1 + Z30;Y30 = Z1 - Z30;Y2 = Z2 + Z29;Y29 = Z2 - Z29;Y3 = Z3 + Z28;Y28 = Z3 - Z28;Y4 = Z4 + Z27;Y27 = Z4 - Z27;Y5 = Z5 + Z26;Y26 = Z5 - Z26;Y6 = Z6 + Z25;Y25 = Z6 - Z25;Y7 = Z7 + Z24;Y24 = Z7 - Z24;Y8 = Z8 + Z23;Y23 = Z8 - Z23;Y9 = Z9 + Z22;Y22 = Z9 - Z22;Y10 = Z10 + Z21;Y21 = Z10 - Z21;Y11 = Z11 + Z20;Y20 = Z11 - Z20;Y12 = Z12 + Z19;Y19 = Z12 - Z19;Y13 = Z13 + Z18;Y18 = Z13 - Z18;Y14 = Z14 + Z17;Y17 = Z14 - Z17;Y15 = Z15 + Z16;Y16 = Z15 - Z16; }

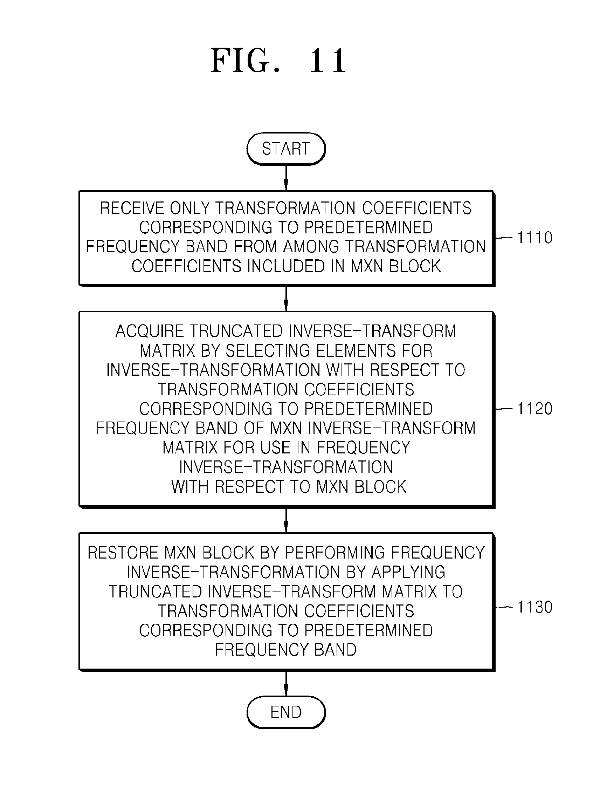

FIG. 11 is a flowchart illustrating an image inverse-transforming method according to an embodiment of the present invention.

Referring to FIG. 11, in operation 1110, the truncated inverse-transform matrix acquisition unit 910 receives only transformation coefficients corresponding to a predetermined frequency band from among the transformation coefficients included in an MxN (where M and N are positive integers) block. In operation 1120, the truncated inverse-transform matrix acquisition unit 910 acquires a truncated inverse-transform matrix by selecting elements for inverse-transformation with respect to the transformation coefficients corresponding to the predetermined frequency band of an MxN inverse-transform matrix for use in frequency inverse-transformation with respect to the MxN block. As described above, a bitstream may include information regarding various low frequency band shapes such as a rectangular low frequency band block and a triangular low frequency band block, as shown in FIGS. 12A and 12B, and information regarding the sizes of a low frequency band, and the truncated inverse-transform matrix acquisition unit 910 may determine based on the information regarding the low frequency band shapes and the information regarding the sizes of a low frequency band what shape and what frequency band of transformation coefficients the transformation coefficients acquired in transformation correspond to from among the transformation coefficients included in an overall transformed block.

When the size of a transformed block to be inversely transformed is axd, the truncated inverse-transform matrix acquisition unit 910 produces an Nxd truncated vertical inverse-transform matrix by selecting elements corresponding to d left columns from an MxN vertical inverse-transform matrix, and produces an axN truncated horizontal inverse-transform matrix by selecting elements corresponding to a upper rows from an MxN horizontal inverse-transform matrix.

In operation 1130, the frequency inverse-transformation unit 920 performs frequency inverse-transformation by applying the truncated inverse-transform matrix to the transformation coefficients corresponding to the predetermined frequency band. In the above-described example, an MxN residual block is restored via matrix operations among the axd transformed block, the Nxd truncated vertical inverse-transform matrix, and the axN truncated horizontal inverse-transform matrix.

One or more exemplary embodiments can also be embodied as computer-readable codes on a computer-readable recording medium. The computer-readable recording medium is any data storage device that can store data which can be thereafter read by a computer system. Examples of the computer-readable recording medium include read-only memory (ROM), random-access memory (RAM), CD-ROMs, magnetic tapes, floppy disks, optical data storage devices, etc. The computer-readable recording medium can also be distributed over network-coupled computer systems so that the computer-readable code is stored and executed in a distributed fashion. Moreover, one or more units of the above-described elements can include a processor or microprocessor executing a computer program stored in a computer-readable medium.

While exemplary embodiments have been particularly shown and described above, it will be understood by those of ordinary skill in the art that various changes in form and details may be made therein without departing from the spirit and scope of the present inventive concept as defined by the following claims.

**Claims**

1. An image transforming method comprising:

   selecting a predetermined frequency area for frequency transformation with respect to an MxN input block, wherein M and N are positive integers;
   acquiring a truncated transform matrix by selecting elements for generation of transformation coefficients corresponding to the selected frequency area from among elements of an MxN transform matrix for use in the frequency transformation with respect to the MxN input block; and
   producing transformation coefficients corresponding to the selected frequency area by performing frequency transformation by applying the truncated transform matrix to the MxN input block.

2. The image transforming method of claim 1, wherein
   the acquiring of the truncated transform matrix comprises: when an axd low frequency area for frequency transformation with respect to the MxN input block is selected, wherein a denotes a positive integer smaller than M and d denotes a positive integer smaller than N,
   acquiring an axM truncated vertical transform matrix from an MxN vertical transform matrix; and
   acquiring an Nxd truncated horizontal transform matrix from an MxN horizontal transform matrix.

3. The image transforming method of claim 2, wherein
   the producing of the transformation coefficients comprises, when a matrix representing the MxN input block is referred to as X, the truncated vertical transform matrix is referred to as MCf, and the truncated horizontal transform matrix is referred to as $MCf^T$, producing transformation coefficients corresponding to the axd low frequency area via a matrix operation expressed by Equation; $MCf * X * MCf^T$.

4. An image inverse-transforming method comprising:

   receiving transformation coefficients of a predetermined frequency band from among transformation coefficients of an MxN block, wherein M and N are positive integers;
   acquiring a truncated inverse-transform matrix by selecting elements for inverse transformation with respect to the transformation coefficients of the selected frequency band from among elements of an MxN inverse-transform matrix for use in frequency inverse-transformation with respect to the MxN block; and
   restoring the MxN block by performing frequency inverse-transformation by applying the truncated inverse-transform matrix to the transformation coefficients of the selected frequency band.

5. The image inverse-transforming method of claim 4, wherein a shape of the predetermined frequency band is a rectangle or a triangle.

6. The image inverse-transforming method of claim 5, further comprising extracting shape information of the predetermined frequency band and size information of the predetermined frequency band from a bitstream.

7. The image inverse-transforming method of claim 4, wherein
   the acquiring of the truncated inverse-transform matrix comprises: when the transformation coefficients of the predetermined frequency band are transformation coefficients of an axd low frequency band positioned at a leftmost portion of the MxN block from among the transformation coefficients of the MxN block, wherein a denotes a positive integer smaller than M and d denotes a positive integer smaller than N,
   acquiring an Mxa truncated vertical inverse-transform matrix from an MxN vertical inverse-transform matrix; and
   acquiring an axN truncated horizontal inverse-transform matrix from an MxN horizontal inverse-transform matrix.

8. The image inverse-transforming method of claim 7, wherein the restoring of the MxN block comprises, when a matrix representing the transformation coefficients of the axd low frequency band is X, the truncated vertical inverse-transform matrix is MCi, and the truncated horizontal transform matrix is $IMCi^T$, restoring the MxN block via a matrix operation expressed by Equation; $MCi * X * MCi^T$.

9. The image inverse-transforming method of claim 4, wherein the MxN inverse-transform matrix is an inverse-transform matrix obtained by substituting values based on a trigonometric function from among the elements of an MxN inverse-transform matrix for use in one-dimensional (1 D) IDCT (Inverse DCT) with rational numbers.

**EP 2 624 561 A2**

10. The image inverse-transforming method of claim 4, wherein the restoring of the MxN block is performed via a shift operation, additions, and subtractions with which multiplications included in a transformation process using the inverse-transform matrix are substituted.

11. The image inverse-transforming method of claim 10, wherein, when M and N are 32, a and d are 16, X0 through X15 denote input values to be inversely transformed, Ai, Bi, Ci, Di, Ei, Fi, and Gi denote intermediate values, and Y0 through Y31 denote output values, the restoring of the MxN block is performed by repeating the following point inverse-transformation with respect to row-direction input values and column-direction input values of a 16x16 input block, wherein i denotes an integer ranging from 0 to 31: { /stage 0 G16 = 12*X1 >> 8;G17 171 *X15)>> 8;G18 = (109*X9)>>8;G19 = (- 86*X7) >> 8;G20 = (62*X5) >> 8;G21 = (-131*X11) >> 8;G22 = (152*X13) >> 8;G23=(-37 *X3) >> 8;G24 = (253*X3) >> 8;G25 = (205*X13) >> 8;G26 = (219*X11) >> 8;G27 = ( 248 * X5) >> 8;G28 = ( 241 * X7 ) >> 8;G29 = ( 231 * X9) >> 8;G30 = ( 189 * X15 ) >> 8;G31 = ( 255 * X1 ) >> 8;

/Stage 1 F8 = (25*X2) >> 8;F9 = ( - 162 * X 14) >> 8;F10 = (120 * X10 ) >> 8;F11 = (-74*X6)>> 8;F12 = ( 244 * X6 ) >> 8;F13 = ( 225 * X10) >> 8;F14 = ( 197 * X14 ) >> 8;F15 = ( 254 * X2) >> 8;

F16 = G16 + G17;F17 = G16 - G17;F18 = G19 - G18;F19 = G19 + G18;F20 = G20 + G21 ;F21 = G20 - G21;F22 = G23 - G22;F23 = G23 + G22;F24 = G24 + G25;F25 = G24 - G25;F26 = G27 - G26;F27 = G27 + G26;F28 = G28 + G29;F29 = G28 - G29;F30 = G31 - G30;F31 = G31 + G30;
/stage 2
E4 = (49 * X4 ) >> 8;E5 142 * X12) >> 8;E6 (212 * X12 ) >> 8;E7 = (251 * X4) >> 8; E8 = F8 + F9;E9 = F8 - F9;E10 = F11 - F10;E11 = F11 + F10;E12 = F12 + F13;E13 = F12 - F13;E14 = F15 - F14;E15 = F15 + F14;E17 = ( 49 * F30 - 251 * F17) >> 8;E18 = ( - 251*F29 - 49*F18) >> 8;E21 = ( 212 * F26 - 142 * F21 ) >> 8;E22 = ( - 142*F25 - 212*F22) >> 8;E25 = ( 212 * F25 -142 * F22) >> 8;E26 = ( 142 * F26 + 212 * F21) >> 8;E29 = ( 49 * F29 - 251 * F18) >> 8;E30 = ( 251 * F30 + 49 * F17) >> 8;
/stage 3 D0 = (181 * ( X0 )) >> 8;D1 = (181 * ( X0 )) >> 8;D2 = ( 97 * X8 ) >> 8;D3 = ( 236 * X8 ) >> 8;
D4 = E4 + E5;D5 = E4 - E5;D6 = E7 - E6;D7 = E7 + E6;D9 = ( 97*E14 - 236*E9) >> 8;D10 = (- 236*E13 - 97*E10) >> 8;D13 = ( 97 * E13 - 236 * E10) >> 8;D14 = ( 236 * E14 + 97 * E9) >> 8;D16 = F16 + F19;D19 = F16 - F19;D20 = F23 - F20;D23 = F23 + F20;D24 = F24 + F27;D27 = F24 - F27;D28 = F31 - F28;D31 = F31 + F28;D17 = E17 + E18;D18 = E17 - E18;D21 = E22 - E21 ;D22 = E22 + E21 ;D25 = E25 + E26;D26 = E25 - E26;D29 = E30 - E29; D30 = E30 + E29;
/stage 4
C0 = D0 + D3;C3 = D0 - D3;C8 = E8 + E11;C11 = E8 - E11;C12 = E15 - E12;C15 = E15 + E12;C1 = D1 + D2;C2 = D1 - D2;C9 = D9 + D10;C10 = D9 - D10;C13 = D14 - D13;C14 = D14 + D13;C5 = (181 * (D6 - D5 )) >> 8;C6 = (181 * ( D6 + D5 )) >> 8;C18 = ( 97*D29 - 236*D18) >> 8;C20 = ( - 236*D27 - 97*D20) >> 8;C26 = ( - 236*D21 + 97*D26) >> 8;C28 = ( 97*D19 + 236*D28) >> 8;C19 = ( 97*D28 - 236*D19) >> 8;C21 = (- 236*D26 - 97*D21) » 8; C27 = (- 236*D20 + 97*D27) >> 8;C29 = ( 97*D18 + 236*D29) >> 8;
/stage 5
B0 = C0 + D7;B7 = C0 - D7;B1 = C1 + C6;B6 = C1 - C6;B2 = C2 + C5;B5 = C2 - C5;B3 = C3 + D4;B4 = C3 - D4; B10 = ( 181 * ( C13 - C10 )) >> 8;B13 = ( 181 * ( C13 + C10 )) >> 8;B11 = ( 181 * (C12-C11 )) >> 8;B12 = ( 181 * ( C12 + C11 )) >> 8;B16 = D16 + D23;B23 = D16 - D23;B24 = D31 - D24;B31 = D31 + D24;B17 = D17 + D22;B22 = D17 - D22;B25 = D30 - D25;B30 = D30 + D25;B18 = C18 + C21;B21 = C18 - C21;B26 = C29 - C26;B29 = C29 + C26;B19 = C19 + C20;B20 = C19 - C20;B27 = C28 - C27;B28 = C28 + C27;
/stage 6
A0 = B0 + C15;A15 = B0 - C15;A1 = B1 + C14;A14 = B1 - C14;A2 = B2 + B13;A13 = B2 - B13;A3 = B3 + B12;A12 = B3 - B12;A4 = B4 + B11 ;A11 = B4 - B11 ;A5 = B5 + B10;A10 = B5 - B10;A6 = B6 + C9;A9 = B6 - C9;A7 = B7 + C8;A8 = B7 - C8;A20 = ( 181 * ( B27 - B20 )) >> 8;A27 = ( 181 * ( B27 + B20 )) >> 8;A21 = ( 181 * ( B26 - B21 )) >> 8;A26 = ( 181 * ( B26 + B21 )) >> 8;A22 = ( 181 * ( B25 - B22 )) >> 8;A25 = ( 181 * ( B25 + B22 )) >> 8;A23 = ( 181 * ( B24 - B23 )) >> 8;A24 = ( 181 * ( B24 + B23 )) >> 8;
/stage 7
Y0 = A0 + B31 ;Y31 = A0 - B31;Y1 = A1 + B30;Y30 = A1 - B30;Y2 = A2 + B29;Y29 = A2 - B29;Y3 = A3 + B28;Y28 = A3 - B28;Y4 = A4 + A27;Y27 = A4 - A27;Y5 = A5 + A26;Y26 = A5 - A26;Y6 = A6 + A25;Y25 = A6 - A25;Y7 = A7 + A24;Y24 = A7 - A24;Y8 = A8 + A23;Y23 = A8 - A23;Y9 = A9 + A22;Y22 = A9 - A22;Y10 = A10 + A21;Y21 = A10 - A21;Y11 = A11 + A20;Y20 = A11 - A20;Y12 = A12 + B19;Y19 = A12 - B19;Y13 = A13 + B18;Y18 = A13 - B18; Y14 = A14 + B17;Y17 = A14 - B17;Y15 = A15 + B16;Y16 = A15 - B16; }

12. The image inverse-transforming method of claim 10, wherein, when M and N are 64, a and d are 16, X0 through X31 denote input values to be inversely transformed, Ai, Bi, Ci, Di, Ei, Fi, and Zi denote intermediate values, and Y0 through Y63 denote output values, the restoring of the MxN block is performed by repeating the following point inverse-transformation with respect to the row-direction input values and the column-direction input values of the 16x16 input block, wherein i denotes an integer ranging from 0 to 63: {

/stage 0

H32 = (25*X1) >> 10;H33 = 0;H34 = 0;H35 = (-369*X15) >> 10;H36 = (224*X9) >> 10;H37 = 0;H38 = 0;H39 = (-175*X7) >> 10;H40 = (125*X5) >> 10;H41 = 0;H42 = 0;H43 = (-273*X11) >> 10;H44 = (321*X13) >> 10;H45 = 0; H46 = 0;H47 = (-75*X3) >> 10;H48 = (1021*X3) >> 10;H49 = 0;H50 = 0;H51 = (972*X13) >> 10;H52 = (987*X11) >> 10;H53 = 0;H54 = 0;H55 = (1016*X5) >> 10;H56 = (1009*X7) >> 10;H57 = 0;H58 = 0;H59 = (999*X9) >> 10; H60 = (955*X15) >> 10;H61 = 0;H62 = 0;H63 = (1024*X1) >> 10;

/stage 1

G16 = (50*X2) >> 10;G17 = 0;G18 = 0;G19 = (-345*X14) >> 10;G20 = (249*X10) >> 10;G21 = 0;G22 = 0;G23 = (-150*X6) >> 10;G24 = (1013*X6) >> 10;G25 = 0;G26 = 0;G27 = (993*X10) >> 10;G28 = (964*X14) >> 10;G29 = 0; G30 = 0;G31 = (1023*X2) >> 10; G32 = H32+H33;G33 = H32-H33;G34 = H35-H34;G35 = H35+H34;G36 = H36+H37; G37 = H36-H37;G38 = H39-H38;G39 = H39+H38;G40 = H40+H41;G41 = H40-H41;G42 = H43-H42;G43 = H43+H42; G44 = H44+H45;G45 = H44-H45;G46 = H47-H46;G47 = H47+H46;G48 = H48+H49;G49 = H48-H49;G50 = H51-H50;G51 = H51+H50;G52 = H52+H53;G53 = H52-H53;G54 = H55-H54;G55 = H55+H54;G56 = H56+H57;G57 = H56-H57;G58 = H59-H58;G59 = H59+H58;G60 = H60+H61;G61 = H60-H61;G62 = H63-H62;G63 = H63+H62;

/stage 2

F8 = (100*X4)>> 10;F9 = 0;F10 = 0;F11 = (-297*X12)>> 10;F12 = (980*X12)>> 10;F13 = 0;F14 = 0;F15 = (1019*X4) >> 10;

F16 = G16+G17;F17 = G16-G17;F18 = G19-G18;F19 = G19+G18;F20 = G20+G21;F21 = G20-G21;F22 = G23-G22;F23 = G23+G22;F24 = G24+G25;F25 = G24-G25;F26 = G27-G26;F27 = G27+G26;F28 = G28+G29;F29 = G28-G29;F30 = G31-G30;F31 = G31+G30;F33 = (100*G62-1019*G33) >> 10;F34 = (-1019*G61-100*G34) >> 10; F37 = (792*G58-650*G37) >> 10;F38 = (-650*G57-792*G38) >> 10;F41 = (483*G54-903*G41) » 10;F42 = (-903*G53-483*G42) >> 10;F45 = (980*G50-297*G45) >> 10;F46 = (-297*G49-980*G46) >> 10;F49 = (980*G49-297*G46) >> 10;F50 = (297*G50+980*G45) » 10;F53 = (483*G53-903*G42) >> 10;F54 = (903*G54+483*G41) >> 10;F57 = (792*G57-650*G38) >> 10;F58 = (650*G58+792*G37) >> 10;F61 = (100*G61-1019*G34) » 10;F62 = (1019*G62+100*G33) >> 10;

/stage 3

E4 = (200*X8) >> 10;E5 = 0;E6 = 0;E7 = (1004*X8) >> 10;

E8 = F8+F9;E9 = F8-F9;E10 = F11-F10;E11 = F11+F10;E12 = F12+F13;E13 = F12-F13;E14 = F15-F14;E15 = F15+F14;E17 = (200*F30-1004*F17) >> 10;E18 = (-1004*F29-200*F18) >> 10;E21 = (851*F26-569*F21) >> 10; E22 = (-569*F25-851*F22) » 10;E25 = (851*F25-569*F22) >> 10;E26 = (569*F26+851*F21) >> 10;E29 = (200*F29-1004*F18) >> 10;E30 = (1004*F30+200*F17) >> 10;E32 = G32+G35;E33 = F33+F34;E34 = F33-F34; E35 = G32-G35;E36 = G39-G36;E37 = F38-F37;E38 = F38+F37;E39 = G39+G36;E40 = G40+G43;E41 = F41+F42; E42 = F41-F42;E43 = G40-G43;E44 = G47-G44;E45 = F46-F45;E46 = F46+F45;E47 = G47+G44;E48 = G48+G51; E49 = F49+F50;E50 = F49-F50;E51 = G48-G51;E52 = G55-G52;E53 = F54-F53;E54 = F54+F53;E55 = G55+G52; E56 = G56+G59;E57 = F57+F58;E58 = F57-F58;E59 = G56-G59;E60 = G63-G60;E61 = F62-F61;E62 = F62+F61; E63 = G63+G60;

/stage 4

D0 = (724*(X0)) >> 10;D1 = (724*(X0)) >> 10;D2 = 0;D3 = 0;

D4 = E4+E5;D5 = E4-E5;D6 = E7-E6;D7 = E7+E6;D9 = (392*E14-946*E9) >> 10;D10 = (-946*E13-392*E10) 10; D13 = (392*E13-946*E10) >> 10;D14 = (946*E14+392*E9) >> 10;D16 = F16+F19;D19 = F16-F19;D20 = F23-F20; D23 = F23+F20;D24 = F24+F27;D27 = F24-F27;D28 = F31-F28;D31 = F31+F28;D17 = E17+E18;D18 = E17-E18; D21 = E22-E21;D22 = E22+E21;D25 = E25+E26; D26 = E25-E26; D29 = E30-E29;D30 = E30+E29;D34 = (200*E61-1004*E34) >> 10;D35 = (200*E60-1004*E35) >> 10;D36 = (-1004*E59-200*E36) >> 10;D37 = (-1004*E58-200*E37) >> 10;D42 = (851*E53-569*E42) >> 10;D43 = (851*E52-569*E43) >> 10;D44 = (-569*E51-851*E44) » 10;D45 = (-569*E50-851*E45) >> 10;D50 = (851*E50-569*E45) >> 10;D51 = (851*E51-569*E44) >> 10;D52 = (569*E52+851*E43) >> 10;D53 = (569*E53+851*E42) » 10;D58 = (200*E58-1004*E37) >> 10;D59 = (200*E59-1004*E36) >> 10;D60 = (1004*E60+200*E35) >> 10;D61 = (1004*E61+200*E34) >> 10;

/stage 5

C0 = D0+D3;C3 = D0-D3;C8 = E8+E11;C11 = E8-E11;C12 = E15-E12;C15 = E15+E12;C1 = D1+D2;C2 = D1-D2; C9 = D9+D10;C10 = D9-D10;C13 = D14-D13;C14 = D14+D13;C5 = (724*(D6-D5)) >> 10;C6 = (724*(D6+D5)) >> 10;C18 = (392*D29-946*D18) >> 10;C20 = (-946*D27-392*D20) >> 10;C26 = (-946*D21+392*D26) » 10;C28 = (392*D19+946*D28) >> 10;C19 = (392*D28-946*D19) >> 10;C21 = (-946*D26-392*D21) >> 10;C27 = (-946*D20+392*D27) >> 10;C29 = (392*D18+946*D29) » 10;C32 = E32+E39;C39 = E32-E39;C40 = E47-E40;C47 = E47+E40;C48 = E48+E55;C55 = E48-E55;C56 = E63-E56;C63 = E63+E56;C33 = E33+E38;C38 = E33-E38;C41 = E46-E41;C46 = E46+E41;C49 = E49+E54;C54 = E49-E54;C57 = E62-E57;C62 = E62+E57;C34 = D34+D37;C37 = D34-D37;C42 = D45-D42;C45 = D45+D42;C50 = D50+D53;C53 = D50-D53;C58 = D61-D58;C61 = D61+D58;

C35 = D35+D36;C36 = D35-D36;C43 = D44-D43;C44 = D44+D43;C51 = D51+D52;C52 = D51-D52;C59 = D60-D59;C60 = D60+D59;
/stage 6
B0 = C0+D7;87 = C0-D7;B1 = C1+C6;B6 = C1-C6;B2 = C2+C5;B5 = C2-C5;B3 = C3+D4;B4 = C3-D4;B10 = (724*(C13-C10)) >> 10;B13 = (724*(C13+C10)) >> 10;B11 = (724*(C12-C11)) >> 10;B12 = (724*(C12+C11)) >> 10;B16 = D16+D23;B23 = D16-D23;B24 = D31-D24;B31 = D31+D24;B17 = D17+D22;B22 = D17-D22;B25 = D30-D25;B30 = D30+D25;B18 = C18+C21;B21 = C18-C21;B26 = C29-C26;B29 = C29+C26;B19 = C19+C20;B20 = C19-C20;B27 = C28-C27;B28 = C28+C27;B36 = (392*C59-946*C36) >> 10;B40 = (-946*C55-392*C40) >> 10;B52 = (-946*C43+392*C52) » 10;B56 = (392*C39+946*C56) >> 10;B37 = (392*C58-946*C37) >> 10;B41 = (-946*C54-392*C41) >> 10;B53 = (-946*C42+392*C53) >> 10;B57 = (392*C38+946*C57) » 10;B38 = (392*C57-946*C38) >> 10;B42 = (-946*C53-392*C42) >> 10;B54 = (-946*C41+392*C54) >> 10;B58 = (392*C37+946*C58) >> 10;B39 = (392*C56-946*C39) » 10;B43 = (-946*C52-392*C43) >> 10;B55 = (-946*C40+392*C55) >> 10;B59 = (392*C36+946*C59) >> 10;
/stage 7
A0 = B0+C15;A15 = B0-C15;A1 = B1+C14;A14 = B1-C14;A2 = B2+B13;A13 = B2-B13;A3 = B3+B12;A12 = B3-B12;A4 = B4+B11;A11 = B4-B11;A5 = B5+B10;A10 = B5-B10;A6 = B6+C9;A9 = B6-C9;A7 = B7+C8;A8 = B7-C8;A20 = (724*(B27-B20)) >> 10;A27 = (724*(B27+B20)) >> 10;A21 = (724*(B26-B21)) >> 10;A26 = (724*(B26+B21)) >> 10;A22 = (724*(B25-B22)) >> 10;A25 = (724*(B25+B22)) >> 10;A23 = (724*(B24-B23)) >> 10;A24 = (724*(B24+B23)) >> 10;A32 = C32+C47;A47 = C32-C47;A48 = C63-C48;A63 = C63+C48;A33 = C33+C46;A46 = C33-C46;A49 = C62-C49;A62 = C62+C49;A34 = C34+C45;A45 = C34-C45;A50 = C61-C50;A61 = C61+C50;A35 = C35+C44;A44 = C35-C44;A51 = C60-C51;A60 = C60+C51;A36 = B36+B43;A43 = B36-B43;A52 = B59-B52;A59 = B59+B52;A37 = B37+B42;A42 = B37-B42;A53 = B58-B53;A58 = B58+B53;A38 = B38+B41;A41 = B38-B41;A54 = B57-B54;A57 = B57+B54;A39 = B39+B40;A40 = B39-B40;A55 = B56-B55;A56 = B56+B55;
/stage 8
Z0 = A0+B31;Z31 = A0-B31;Z1 = A1+B30;Z30 = A1-B30;Z2 = A2+B29;Z29 = A2-B29;Z3 = A3+B28;Z28 = A3-B28;Z4 = A4+A27;Z27 = A4-A27;Z5 = A5+A26;Z26 = A5-A26;Z6 = A6+A25;Z25 = A6-A25;Z7 = A7+A24;Z24 = A7-A24;Z8 = A8+A23;Z23 = A8-A23;Z9 = A9+A22;Z22 = A9-A22;Z10 = A10+A21;Z21 = A10-A21;Z11 = A11+A20;Z20 = A11-A20;Z12 = A12+B19;Z19 = A12-B19;Z13 = A13+B18;Z18 = A13-B18;Z14 = A14+B17;Z17 = A14-B17;Z15 = A15+B16;Z16 = A15-B16;Z40 = (724*(A55-A40)) >> 10;Z55 = (724*(A55+A40)) >> 10;Z41 = (724*(A54-A41)) >> 10;Z54 = (724*(A54+A41)) » 10;Z42 = (724*(A53-A42)) >> 10;Z53 = (724*(A53+A42)) >> 10;Z43 = (724*(A52-A43)) » 10;Z52 = (724*(A52+A43)) >> 10;Z44 = (724*(A51-A44)) >> 10;Z51 = (724*(A51+A44)) >> 10;Z45 = (724*(A50-A45)) >> 10;Z50 = (724*(A50+A45)) >> 10;Z46 = (724*(A49-A46)) >> 10;Z49 = (724*(A49+A46)) >> 10;Z47 = (724*(A48-A47)) >> 10;Z48 = (724*(A48+A47)) >> 10;
/stage 9
Y0 = Z0+A63;Y63 = Z0-A63;Y1 = Z1+A62;Y62 = Z1-A62;Y2 = Z2+A61;Y61 = Z2-A61;Y3 = Z3+A60;Y60 = Z3-A60;Y4 = Z4+A59;Y59 = Z4-A59;Y5 = Z5+A58;Y58 = Z5-A58;Y6 = Z6+A57;Y57 = Z6-A57;Y7 = Z7+A56;Y56 = Z7-A56;Y8 = Z8+Z55;Y55 = Z8-Z55;Y9 = Z9+Z54;Y54 = Z9-Z54;Y10 = Z10+Z53;Y53 = Z10-Z53;Y11 = Z11+Z52;Y52 = Z11-Z52;Y12 = Z12+Z51;Y51 = Z12-Z51;Y13 = Z13+Z50;Y50 = Z13-Z50;Y14 = Z14+Z49;Y49 = Z14-Z49;Y15 = Z15+Z48;Y48 = Z15-Z48;Y16 = Z16+Z47;Y47 = Z16-Z47;Y17 = Z17+Z46;Y46 = Z17-Z46;Y18 = Z18+Z45;Y45 = Z18-Z45;Y19 = Z19+Z44;Y44 = Z19-Z44;Y20 = Z20+Z43;Y43 = Z20-Z43;Y21 - Z21+Z42;Y42 = Z21-Z42;Y22 = Z22+Z41;Y41 = Z22-Z41;Y23 = Z23+Z40;Y40 = Z23-Z40;Y24 = Z24+A39;Y39 = Z24-A39;Y25 = Z25+A38;Y38 = Z25-A38;Y26 = Z26+A37;Y37 = Z26-A37;Y27 = Z27+A36;Y36 = Z27-A36;Y28 = Z28+A35;Y35 = Z28-A35;Y29 = Z29+A34;Y34 = Z29-A34;Y30 = Z30+A33;Y33 = Z30-A33;Y31 = Z31+A32;Y32 = Z31-A32; }

13. The image inverse-transforming method of claim 10, wherein, when M and N are 32, a and d are 16, X0 through X15 denote input values to be inversely transformed, Ai, Bi, Ci, Di, Ei, Fi, and Zi denote intermediate values, and Y0 through Y63 denote output values, the restoring of the MxN block is performed by repeating the following point inverse-transformation with respect to the row-direction input values and the column-direction input values of the 16x16 input block, wherein i denotes an integer ranging from 0 to 31: {
/stage 0
D0= X0;E24 = X1;E12 = X2;F16 = -X3;D4 = X4; F31 = X5; E8 = X6; E26 = -X7;D2 = X8; E21 = X9; E15=X10; F29 = X11;E5 = X12; F18 = -X13; D13=X14; D22 = X15;
/stage 1
E16 = (251*F16 ) >> 8;E17 = (-49*F16 ) >> 8;E18 = (212*F18 ) >> 8;E19 = (-142*F18 ) >> 8;E28 = (142*F29) >> 8;E29 = (212*F29) >> 8;E30 = (49*F31) >> 8;E31 = (251*F31) >> 8;
/stage 2
D5 = (181*(E5 )) >> 8;D7 = (181*(E5)) >> 8;D8 = (97*E8) >> 8;D9 = (-236*E8) >> 8;D11 = (181*(- E12)) >> 8;D12 = (181*( E12)) >> 8;D14 = (236*E15) >> 8;D15 = (97*E15) >> 8;D16 = E16 + E18;C18 = E16 - E18;C17 = E17 + E19;D19 = E17 - E19;D20 = (- 97*E21) » 8;D21 = ( 236*E21) >> 8;D23 = (181*(- E24)) >> 8;D24 = (181*( E24)) >> 8;D26 = (236*E26 ) >> 8;D27 = (97*E26 ) >> 8;D28 = - E28 + E30;C30 = E28 + E30;C29 = - E29 + E31;D31 = E29 + E31;

/stage 3

C0 = (181*D0) >> 8;C1 = (181*D0) >> 8;C2 = (97*D2) >> 8;C3 = (236*D2) >> 8;C4 = D4 + D5;C5 = D4 - D5;C6 = D7; C7 = D7; C8 = D8 + D14;C14 = D8 - D14;C9 = D9 + D15;C15 = D9 - D15;C10 = D11; C11 =- D11;C12 = D12 + D13;C13 = D12 - D13; C16 = (181*(D16 - D19)) >> 8;C19 = (181*(D16 + D19)) >> 8;C20 = D20 + D26;C26 = D20 - D26;C21 = D21 + D27;C27 = D21 - D27;C22 = D22 + D23;C23 = D22 - D23;C24 = D24 ;C25 = D24 ;C28 = (181* (D28 - D31)) >> 8;C31 = (181*(D28 + D31)) >> 8;

/stage 4

B0 = C0 + C3;B3 = C0 - C3;B1 = C1 + C2;B2 = C1 - C2;B4 = (49*C4 - 251*C7) >> 8;B7 = (251*C4 + 49*C7) >> 8; B5 = (142*C5 - 212*C6) >> 8;B6 = (212*C5 + 142*C6) >> 8;B8 = C8+C11;B11 = C8 - C11;B9 = C9 + C10;B10 = C9 - C10;B12 = C12 + C15;B15 = C12-C15;B13 = C13 + C14;B14 = C13 - C14;B16 = C16 + C28;B28 = C16 - C28; B17 = C17 + C29;B29 = C17 - C29;B18 = C18 + C30;B30 = C18 - C30;B19 = C19 + C31;B31 = C19 - C31;B20 = C20 + C23;B23 = C20 - C23;B21 = C21 + C22;B22 = C21 - C22;B24 = C24 + C27;B27 = C24 - C27;B25 = C25 + C26;B26 = C25 - C26;

/stage 5 A0 = B0 + B7;A7 = B0 - B7;A1 = B1 + B6;A6 = B1 - B6;A2 = B2 + B5;A5 = B2 - B5;A3 = B3 + B4;A4 = B3 - B4;A8 = (197*B8 - 162*B15) >> 8;A15 = (162*B8 + 197*B15) >> 8;A9 = (120*B9 + 225*B14) >> 8;A14 = (-225*B9 + 120*B14) >> 8;A10 = (244*B10 - 74*B13) >> 8;A13 = (74*B10 + 244*B13) >> 8;A11 = (25*B11 + 254*B12) >> 8; A12 = (-254*B11 + 25*B12) >> 8;A16 = B16 + B23;A23 = B16 - B23;A17 = B17 + B22;A22 = B17 - B22;A18 = B18 + B21;A21 = B18 - B21;A19 = B19 + B20;A20 = B19 - B20;A24 = B24 + B31;A31 = B24 - B31;A25 = B25 + B30; A30 = B25 - B30;A26 = B26 + B29;A29 = B26 - B29;A27 = B27 + B28;A28 = B27 - B28;

/stage 6

Z0 = A0 + A15;Z1 = A1 + A14;Z2 = A2 + A13;Z3 = A3 + A12;Z4 = A4 + A11;Z5 = A5 + A10;Z6 = A6 + A9;Z7 = A7 + A8;Z8 = A7 - A8;Z9 = A6 - A9;Z10 = A5 - A10;Z11 = A4 - A11;Z12 = A3 - A12;Z13 = A2 - A13;Z14 = A1 - A14; Z15 = A0 - A15;Z16 = (171*A16 + 189*A31) >> 8;Z31 = (-189*A16 + 171*A31) >> 8;Z17 = (205*A17 - 152*A30) >> 8;Z30 = (152*A17 + 205*A30) >> 8;Z18 = (131*A18 + 219*A29) >> 8;Z29 = (-219*A18 + 131*A29) >> 8;Z19 = (231*A19 - 109*A28) >> 8;Z28 = (109*A19 + 231*A28) >> 8;Z20 = (86*A20 + 241*A27) >> 8;Z27 = (-241*A20 + 86*A27) >> 8;Z21 = (248*A21 - 62*A26) >> 8;Z26 = (62*A21 + 248*A26) >> 8;Z22 = (37*A22 + 253*A25) >> 8;Z25 = (-253*A22 + 37*A25) >> 8;Z23 = (255*A23 - 12*A24) >> 8;Z24 = (12*A23 + 255*A24) >> 8

/stage 7

Y0 = Z0 + Z31;Y31 = Z0 - Z31;Y1 = Z1 + Z30;Y30 = Z1 - Z30;Y2 = Z2 + Z29;Y29 = Z2 - Z29;Y3 = Z3 + Z28;Y28 = Z3 - Z28;Y4 = Z4 + Z27;Y27 = Z4 - Z27;Y5 = Z5 + Z26;Y26 = Z5 - Z26;Y6 = Z6 + Z25;Y25 = Z6 - Z25;Y7 = Z7 + Z24;Y24 = Z7 - Z24;Y8 = Z8 + Z23;Y23 = Z8 - Z23;Y9 = Z9 + Z22;Y22 = Z9 - Z22;Y10 = Z10 + Z21;Y21 = Z10 - Z21;Y11 = Z11 + Z20;Y20 = Z11 - Z20;Y12 = Z12 + Z19;Y19 = Z12 - Z19;Y13 = Z13 + Z18;Y18 = Z13 - Z18;Y14 = Z14 + Z17;Y17 = Z14 - Z17;Y15 = Z15 + Z16;Y16 = Z15 - Z16; }

14. The image inverse-transforming method of claim 10, wherein, when M and N are 32, a and d are 16, X0 through X31 denote input values to be inversely transformed, Ai, Bi, Ci, Di, Ei, Fi, and Zi denote intermediate values, and Y0 through Y32 denote output values, the restoring of the MxN block is performed by repeating the following point inverse-transformation with respect to the row-direction input values and the column-direction input values of the 16x16 input block, wherein i denotes an integer ranging from 0 to 31: {

/stage 0 D0= X0;E24 = X1;E12 = X2;F16 = -X3;D4 = X4; F31 = X5; E8 = X6; E26 = -X7;D2 = X8; E21 = X9; E15=X10; F29 = X11;E5 = X12; F18=-X13; D13=X14; D22 = X15;

/stage 1

E17 = - (48*F16>> 8);E16 = F16 + (50*E17>> 8);E19 = - (118*F18 >> 8);E18 = F18 + (171*E19>> 8); E29 = F 29 ;E28 = (171*E29>> 8);E31 = F31 ;E30 = (50*E31>> 8);

/stage 2

D7 = (E5 >> 1);D5= E5 - D7;

D9 = -E8 ;D8 = - (106*D9>> 8);

D12 = E12 ;D11 = - D12;

D15 = (90*E15>> 8);D14 = E15 - (106*D15>> 8);

D16 = E16 + E18;C18 = E16 - E18;C17 = E17 + E19;D19 = E17 - E19;

D21 = E21 ;D20 = - (106*D21>> 8);D24 = E24 ;D23 = - D24;D27 = (90*E26>> 8);D26 = E26 - (106*D27>> 8);D28 = - E28 + E30;C30 = E28 + E30;C29 = - E29 + E31 ;C31 = E29 + E31;

/stage 3

C1 = D0 >> 1;C0 = D0 - C1;

C3 = D2 ;C2 = (106*C3>> 8);

C4 = D4 + D5;C5 = D4 - D5;C6 = D7; C7 = D7;
C8 = D8 + D14;C14 = D8 - D14;C9 = D9 + D15;C15 = D9 - D15;C10 = D11; C11 = - D11;C12 = D12 + D13;C13 = D12 - D13; D16 = D16 - (106*D19>> 8);C19 = D19 + (181*D16>> 8);C16 = D16 - (106*C19>> 8);C20 = D20 + D26; C26 = D20 - D26;C21 = D21 + D27;C27 = D21 - D27;C22 = D22 + D23;C23 = D22 - D23;C24 = D24;C25 = D24; D28 = D28 - (106*D31>> 8);C31 = D31 + (181*D28>> 8);C28 = D28 - (106*C31>> 8);
/stage 4
B0 = C0 + C3;B3 = C0 - C3;B1 = C1 + C2;B2 = C1 - C2;
C4 = C4 - (210*C7>> 8);B7 = C7 + (251*C4>> 8);B4 = C4 - (210*B7>> 8);C5 = C5 - (136*C6>> 8);B6 = C6 + (212*C5>> 8);B5 = C5 - (136*B6>> 8);
B8 = C8 + C11;B11 = C8 - C11;B9 = C9 + C10;B10 = C9 - C10;
B12 = C12 + C15;B15 = C12 - C15;B13 = C13 + C14;B14 = C13 - C14;
B16 = C16 + C28;B28 = C16 - C28;B17 = C17 + C29;B29 = C17 - C29;B18 = C18 + C30;B30 = C18 - C30;B19 = C19 + C31;B31 = C19 - C31;
B20 = C20 + C23;B23 = C20 - C23;B21 = C21 + C22;B22 = C21 - C22;
B24 = C24 + C27;B27 = C24 - C27;B25 = C25 + C26;B26 = C25 - C26;
/stage 5 A0 = B0 + B7;A7 = B0 - B7;A1 = B1 + B6;A6 = B1 - B6;A2 = B2 + B5;A5 = B2 - B5;A3 = B3 + B4;A4 = B3 - B4; B8 = B8 - (91*B15>> 8);A15 = B15 + (162*B8>> 8);A8 = B8 - (91*A15>> 8);B9 = B9 + (153*B14>> 8);A14 = B14 - (225*B9>> 8);A9 = B9 + (153*A14>> 8);B10 = B10 - (37*B13>> 8);A13 = B13 + (74*B10>> 8);A10 = B10 - (37*A13>> 8);B11 = B11 + (232*B12>> 8);A12 = B12 - (254*B11>> 8);A11 = B11 + (232*A12>> 8);A16 = B16 + B23;A23 = B16 - B23;A17 = B17 + B22;A22 = B17 - B22;A18 = B18 + B21;A21 = B18 - B21;A19 = B19 + B20;A20 = B19 - B20; A24 = B24 + B31;A31 = B24 - B31;A25 = B25 + B30;A30 = B25 - B30;A26 = B26 + B29;A29 = B26 - B29;A27 = B27 + B28;A28 = B27 - B28;
/stage 6
Z0 = A0 + A15;Z1 = A1 + A14;Z2 = A2 + A13;Z3 = A3 + A12;Z4 = A4 + A11;Z5 = A5 + A10;Z6 = A6 + A9;Z7 = A7 + A8;Z8 = A7 - A8;Z9 = A6 - A9;Z10 = A5 - A10;Z11 = A4 - A11 ;Z12 = A3 - A12;Z13 = A2 - A13;Z14 = A1 - A14; Z15 = A0 - A15; A16 = A16 + (113*A31>> 8);Z31 = A31 - (189*A16>> 8);Z16 = A16 + (113*Z31>> 8);A17 = A17 - (84*A30>> 8);Z30 = A30 + (152*A17>> 8);Z17 = A17 - (84*Z30>> 8);A18 = A18 + (145*A29>> 8);Z29 = A29 - (219*A18>> 8);Z18 = A18 + (145*Z29>> 8);A19 = A19 - (57*A28>> 8);Z28 = A28 + (109*A19>> 8);Z19 = A19 - (57*Z28>> 8);A20 = A20 + (180*A27>> 8);Z27 = A27 - (241*A20>> 8);Z20 = A20 + (180*Z27>> 8);A21 = A21 - (31*A26>> 8);Z26 = A26 + (62*A21>> 8);Z21 = A21 - (31*Z26>> 8);A22 = A22 + (220*A25>> 8);Z25 = A25 - (253*A22>> 8);Z22 = A22 + (220*Z25>> 8);A23 = A23 - (6*A24>> 8);Z24 = A24 + (12*A23>> 8);Z23 = A23 - (6*Z24>> 8);
/stage 7
Y0 = Z0 + Z31;Y31 = Z0 - Z31;Y1 = Z1 + Z30;Y30 = Z1 - Z30;Y2 = Z2 + Z29;Y29 = Z2 - Z29;Y3 = Z3 + Z28;Y28 = Z3 - Z28;Y4 = Z4 + Z27;Y27 = Z4 - Z27;Y5 = Z5 + Z26;Y26 = Z5 - Z26;Y6 = Z6 + Z25;Y25 = Z6 - Z25;Y7 = Z7 + Z24;Y24 = Z7 - Z24;Y8 = Z8 + Z23;Y23 = Z8 - Z23;Y9 = Z9 + Z22;Y22 = Z9 - Z22;Y10 = Z10 + Z21;Y21 = Z10 - Z21;Y11 = Z11 + Z20;Y20 = Z11 - Z20;Y12 = Z12 + Z19;Y19 = Z12 - Z19;Y13 = Z13 + Z18;Y18 = Z13 - Z18;Y14 = Z14 + Z17;Y17 = Z14 - Z17;Y15 = Z15 + Z16;Y16 = Z15 - Z16; }

**15.** An image inverse-transforming apparatus comprising:

a truncated inverse-transform matrix acquisition unit which acquires a truncated inverse-transform matrix by selecting elements for inverse transformation with respect to transformation coefficients corresponding to a predetermined frequency band from among elements of an MxN inverse-transform matrix for use in frequency inverse-transformation with respect to an MxN block, wherein M and N are positive integers; and
an inverse-transformation unit which restores the MxN block by performing frequency inverse-transformation by applying the truncated inverse-transform matrix to the transformation coefficients of the predetermined frequency band.

# FIG. 1

FIG. 2

200

210
FREQUENCY
AREA
SELECTION
UNIT

220
TRUNCATED
TRANSFORM
MATRIX
ACQUISITION UNIT

230
FREQUENCY
TRANSFORMATION
UNIT

FIG. 3

FIG. 4

FIG. 5

# FIG. 6

$$X_1 \quad \quad Y_1$$
$$\quad \quad R(\theta) \quad \quad$$
$$X_2 \quad \quad Y_2$$

$$\equiv \begin{bmatrix} Y_1 \\ Y_2 \end{bmatrix} = \begin{bmatrix} \cos\theta & -\sin\theta \\ \sin\theta & \cos\theta \end{bmatrix} \begin{bmatrix} X_1 \\ X_2 \end{bmatrix}$$

# FIG. 7

START

SELECT PREDETERMINED FREQUENCY AREA FOR FREQUENCY TRANSFORMATION WITH RESPECT TO MXN INPUT BLOCK — 710

ACQUIRE TRUNCATED TRANSFORM MATRIX BY SELECTING ELEMENTS FOR GENERATION OF TRANSFORMATION COEFFICIENTS CORRESPONDING TO SELECTED FREQUENCY AREA FROM AMONG ELEMENTS OF MXN TRANSFORM MATRIX FOR USE IN FREQUENCY TRANSFORMATION WITH RESPECT TO MXN INPUT BLOCK — 720

PRODUCE TRANSFORMATION COEFFICIENTS CORRESPONDING TO SELECTED FREQUENCY AREA BY PERFORMING FREQUENCY TRANSFORMATION BY APPLYING TRUNCATED TRANSFORM MATRIX TO MXN INPUT BLOCK — 730

END

# FIG. 8

800

| 810 | 820 | 830 | 840 |
|---|---|---|---|
| ENTROPY DECODER | INVERSE-QUANTIZER | INVERSE-TRANSFORMER | PREDICTOR |

# FIG. 9

900

| 910 | 920 |
|---|---|
| TRUNCATED INVERSE-TRANSFORM MATRIX ACQUISITION UNIT | FREQUENCY INVERSE-TRANSFORMATION UNIT |

# FIG. 10

1015

d

M

C

1010

1025

d

a

Y

1020

1035

N

a

C$_i^T$

1030

=

1045

N

M

X

1040

# FIG. 11

START

RECEIVE ONLY TRANSFORMATION COEFFICIENTS CORRESPONDING TO PREDETERMINED FREQUENCY BAND FROM AMONG TRANSFORMATION COEFFICIENTS INCLUDED IN MXN BLOCK ——1110

ACQUIRE TRUNCATED INVERSE-TRANSFORM MATRIX BY SELECTING ELEMENTS FOR INVERSE-TRANSFORMATION WITH RESPECT TO TRANSFORMATION COEFFICIENTS CORRESPONDING TO PREDETERMINED FREQUENCY BAND OF MXN INVERSE-TRANSFORM MATRIX FOR USE IN FREQUENCY INVERSE-TRANSFORMATION WITH RESPECT TO MXN BLOCK ——1120

RESTORE MXN BLOCK BY PERFORMING FREQUENCY INVERSE-TRANSFORMATION BY APPLYING TRUNCATED INVERSE-TRANSFORM MATRIX TO TRANSFORMATION COEFFICIENTS CORRESPONDING TO PREDETERMINED FREQUENCY BAND ——1130

END

## FIG. 12A

## FIG. 12B